(19) Europäisches Patentamt
European Patent Office
Office européen des brevets

(11) **EP 3 474 033 B1**

(12) **EUROPÄISCHE PATENTSCHRIFT**

(45) Veröffentlichungstag und Bekanntmachung des Hinweises auf die Patenterteilung:
**22.04.2020 Patentblatt 2020/17**

(51) Int Cl.:
*G01S 7/48* (2006.01)          *G01S 7/481* (2006.01)
*G01S 7/497* (2006.01)          *G01S 17/10* (2020.01)
*G01S 17/42* (2006.01)

(21) Anmeldenummer: **18177007.4**

(22) Anmeldetag: **11.06.2018**

(54) **SENDE-EMPFANGSMODUL FÜR EINEN OPTOELEKTRONISCHEN SENSOR UND VERFAHREN ZUR ERFASSUNG VON OBJEKTEN**

TRANSMIT-RECEIVE MODULE FOR AN OPTOELECTRONIC SENSOR AND METHOD FOR DETECTING OBJECTS

MODULE D'ÉMISSION ET DE RÉCEPTION POUR UN CAPTEUR OPTOÉLECTRONIQUE ET PROCÉDÉ DE DÉTECTION D'OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.10.2017 DE 102017124535**

(43) Veröffentlichungstag der Anmeldung:
**24.04.2019 Patentblatt 2019/17**

(73) Patentinhaber: **SICK AG**
**79183 Waldkirch (DE)**

(72) Erfinder:
• **Gimpel, Dr. Hartmut**
**79194 Gundelfingen (DE)**
• **Hug, Gottfried**
**79183 Waldkirch (DE)**

(56) Entgegenhaltungen:
**EP-A1- 2 312 919**          **US-A1- 2013 206 967**
**US-A1- 2016 274 222**          **US-A1- 2017 269 215**

**Beschreibung**

Die Erfindung betrifft ein Sende-Empfangsmodul für einen optoelektronischen Sensor und ein Verfahren zur Erfassung von Objekten in einem Überwachungsbereich nach dem Oberbegriff von Anspruch 1 beziehungsweise 12.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Dabei wird oft die Lichtlaufzeit mit einem bekannten Phasen- oder Pulsverfahren gemessen, um den Abstand eines angetasteten Objekts zu bestimmen. Diese Art der Abstandsmessung wird auch als ToF (Time of Flight) oder LIDAR (Light Detection and Ranging) bezeichnet.

Um den Messbereich zu erweitern, kann der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. In den meisten Laserscannern wird die Abtastbewegung durch einen Drehspiegel erreicht. Es ist aber auch bekannt, stattdessen den gesamten Messkopf mit Lichtsendern und Lichtempfängern rotieren zu lassen, wie dies beispielsweise in DE 197 57 849 B4 beschrieben ist.

Die Detektion in den genannten und zahlreichen weiteren optoelektronischen Sensoren basiert auf einem Lichtsender und einem Lichtempfänger, denen in den meisten Fällen eine Sende- und eine Empfangsoptik zugeordnet ist, mit denen das Sendelicht kollimiert beziehungsweise das remittierte Empfangslicht fokussiert und so die Reichweite und die Ortsauflösung erhöht wird. Der Lichtempfänger wird dabei sehr klein ausgelegt, um neben dem eigenen Licht möglichst wenig Fremdlicht zu detektieren sowie eine schnelle elektronische Reaktionszeit zu erzielen. Typische Abmessungen der lichtempfindlichen Fläche des Lichtempfängers liegen im Bereich einiger hundert Mikrometer.

Dementsprechend ist erforderlich, die genannten Bauteile mechanisch zueinander zu positionieren. Diese Justage kann mehrere Freiheitsgrade betreffen. Über den Abstand von Lichtsender zu Sendelinse wird der gewünschte kollimierte Sendestrahl eingestellt. Diese Richtung wird hier als Z-Richtung bezeichnet. Weiterhin muss die transversale Position von mindestens einem beteiligten Bauteil so justiert werden, dass der empfangene Lichtfleck möglichst exakt den Lichtempfänger trifft. Eine solche XY-Justage kann wahlweise am Lichtsender oder Lichtempfänger erfolgen. Durch zusätzliche Justage eines weiteren beteiligten Bauteils in transversaler Richtung lässt sich noch die absolute Richtung bestimmen, in welche der Sendestrahl den Sensor verlässt, also quasi die Blickrichtung des Geräts oder dessen Schielwinkel verändern.

Herkömmliche Sensoren nutzen verschiedene geometrische Anordnungen, die jeweils ihre eigenen Vor- und Nachteile bezüglich der Justageanforderungen haben. Zu unterscheiden sind hier zunächst biaxiale und koaxiale Anordnungen.

In einer biaxialen Anordnung ist die geometrische Achse des Sendelichts eine andere als diejenige des Empfangslichts. Dabei gibt es Varianten mit getrennten Sende- und Empfangslinsen und solche mit einer Doppellinse als gemeinsames Bauteil. Im Falle getrennter Linsen ist das vollständige oben vorgestellte Justage-Programm notwendig. Außerdem wird die lichtempfindliche Fläche des Lichtempfänger oft größer gehalten, als die an sich sehr kleine Abmessung des Lichtflecks erlauben würde, um Toleranzen für Klebeverzug der Fixierung der Justage, seitliche Verschiebungen durch Temperaturänderungen oder einwirkende Kräfte vorzuhalten. Auf die größere lichtempfindliche Fläche fällt mehr Fremdlicht, mit der Folge eines schlechteren Signal-Rausch-Verhaltens und dadurch verringerter Reichweite bei gleicher Sendeleistung. Außerdem hat ein größeres Empfangselement eine langsamere Ansprechzeit und kommt daher mit hohen Frequenzen, insbesondere kurzen Pulsen oder steilen Flanken, schlechter zurecht.

Bei einer gemeinsamen Doppellinse könnte theoretisch die oben erläuterte XY-Justage entfallen. Tatsächlich ist sie meist doch erforderlich, wenn auch in reduziertem Umfang, da die Positionierung bei der Bestückung von Lichtsender und Lichtempfänger Toleranzen im Bereich von hundert Mikrometern aufweist und oft in Bezug auf ein Gehäuseelement durchgeführt wird, das selbst wiederum nur ungenau positioniert ist und Toleranzen aufweist. Deshalb wird auch bei dieser Bauform die lichtempfindliche Fläche größer gehalten, als dies der Lichtfleck selbst erlauben würde.

In koaxialen Anordnungen fallen die geometrischen Achsen von Sendelicht und Empfangslicht zusammen. Am direktesten wird dies erreicht, indem der Lichtsender vor dem Lichtempfänger angeordnet wird. Bei anderen Bauformen werden die Strahlwege durch einen Umlenkspiegel oder einen Teilerspiegel zusammengeführt. Verschiedene Varianten der Sende- und Empfangsoptik sehen eine zentrale Öffnung der Empfangslinse für den Durchtritt des Sendelichts, eine zentral in der Empfangslinse angeordnete Sendelinse oder eine separate Sendelinse vor.

Die koaxialen Anordnungen erfordern ebenfalls das gesamte genannte Justageprogramm. Selbst eine einstückige Empfangslinse mit Sendelinse in ihrem Zentrum ersetzt die XY-Justage nicht, weil wie schon erläutert die Positionierung von Lichtsender und Lichtempfänger nicht präzise genug ist. Bei Anordnungen mit zusätzlichem Spiegel kommen womöglich noch Justageschritte hinzu. Erneut wird zum Toleranzausgleich die lichtempfindliche Fläche vergrößert.

Aus dem Whitepaper von M. Schillgalies "Micro-Hole Chip Technology For Next Level of Integrated Optical Detector Systems", 30.03.2011 ist ein Ansatz mit einer kombinierten Elektronikbaugruppe bekannt geworden, bei welcher der Lichtsender in einem Loch des Lichtempfängers sitzt. Mehr als vage Anwendungsvorschläge werden dafür aber nicht gemacht, es gibt keine praxisfähige optische Sende-Empfangseinheit mit konkreter Optik auf dieser Basis. Auf den ersten Blick kann es auch nicht genügen, der Elektronikbaugruppe eine gemeinsame Sende- und Empfangslinse vorzuordnen. Denn der Strahlengang in jeder Linse ist umkehrbar. Folglich sollte man erwarten, dass eine solche gemeinsame Linse alles Licht, das aus dem Lichtsender stammt, immer auch in den Lichtsender zurück abbildet. Dann würde jedoch der gesamte Nutzlichtanteil des Empfangslichts in das Loch abgebildet, und eine Detektion könnte gar nicht stattfinden. Außerdem wird für die Abmessungen des Lochs ein Durchmesser von 500 $\mu$m vorgeschlagen, der unvorteilhaft groß ist.

Die EP 2 860 497 B1 offenbart einen optoelektronischen Sensor für die Erfassung eines Drehwinkels, bei dem Sendelicht an einer Maßverkörperung reflektiert, wieder empfangen und dann ausgewertet wird. Der Lichtsender sitzt hinter einem Loch des Lichtempfängers, das als Blende zur Strahlformung dient. Eine zusätzliche Optik ist dabei nicht vorgesehen und würde das Messprinzip nur stören.

In einem weiteren optoelektronischen Sensor nach EP 2 312 919 A1 befindet sich in einer koaxialen Anordnung der Lichtsender auf einem ersten Leiterplattenabschnitt im Strahlengang des Lichtempfängers auf einem zweiten Leiterplattenabschnitt. Eine Empfangslinse mit einer Sendelinse in ihrem Zentrum stützt sich mit Beinchen durch Löcher des ersten Leiterplattenabschnitts auf dem zweiten Leiterplattenabschnitt ab und sorgt so für die gewünschten Abstände in Z-Richtung und eine gewisse laterale Ausrichtung. Allerdings sind die Abstände beispielsweise zwischen Lichtsender und Lichtempfänger immer noch im Bereich von Zentimetern. Auf dieser Größenskala sorgt die mechanische Festlegung durch die Empfangslinse für eine grobe Vorjustierung. Eine hochgenaue Positionierung wird aber nur erreicht, wenn dies durch eine Justage mit den oben genannten Schritten verfeinert wird.

Die US 2017/0269215 A1 offenbart ein System für eine dreidimensionale LIDAR-Messung. In einer Ausführungsform ist die Pulslichtquelle hinter dem Detektor angeordnet, und das Sendelicht tritt durch einen Schlitz des Detektors hindurch. In anderen Ausführungsformen liegen Pulslichtquelle und Detektor nebeneinander, und eine Optik bricht das Sendelicht auf die optische Achse um.

Die US 2013/0206967 A1 befasst sich mit einem optoelektronischen Modul, das einen Überwachungsbereich mit Hilfe eines Scanspiegels erfasst.

Es ist daher Aufgabe der Erfindung, ein verbessertes Sende-Empfangsmodul anzugeben.

Diese Aufgabe wird durch ein Sende-Empfangsmodul für einen optoelektronischen Sensor und ein Verfahren zur Erfassung von Objekten in einem Überwachungsbereich nach Anspruch 1 beziehungsweise 12 gelöst. Das Sende-Empfangsmodul ist eine optische Sende-Empfangsbaugruppe mit koaxialem Lichtsender und Lichtempfänger, und zwar in einer direkten koaxialen Anordnung ohne Strahlfaltungen durch Teilerspiegel oder dergleichen. Koaxial bedeutet, dass sich das Sende-Empfangsmodul zumindest nach außen wie ein koaxiales Sende-Empfangsmodul verhält, vorzugsweise ist die Anordnung selbst schon koaxial. Eine gemeinsame Optik fungiert als Sendeoptik für zumindest annähernd kollimiertes Sendelicht und als Empfangsoptik für zumindest annähernd fokussiertes Empfangslicht. Dabei ist der Divergenzwinkel des Lichtsenders und damit der Abstrahlwinkel von Sendelicht kleiner als der Winkel des Empfangslichts.

Die Erfindung geht von dem Grundgedanken aus, dass Lichtsender und Lichtempfänger von Vorneherein in wohldefinierter räumlicher Anordnung zueinander gehalten werden. Dazu sind sie mindestens mittelbar mikromechanisch miteinander verbunden. Lichtsender und Lichtempfänger können praktisch als ein einziges Bauteil mit der in der Mikrosystemtechnik üblichen Präzision der gegenseitigen Anordnung betrachtet werden. Mindestens mittelbar bedeutet, dass Lichtsender und Lichtempfänger entweder miteinander mikromechanisch verbunden sind oder dass es mindestens ein Zwischenteil gibt, das mit Lichtsender und Lichtempfänger mikromechanisch verbunden ist, also eine indirekte mikromechanische Verbindung von Lichtsender und Lichtempfänger.

Die Erfindung hat den Vorteil, dass keine oder allenfalls noch eine einfache und grobe laterale beziehungsweise XY-Justage erforderlich ist, damit der Empfangslichtfleck auf den Lichtempfänger trifft. Dieser Justageschritt findet nämlich genaugenommen bereits in der Fertigung der elektronischen Unterbaugruppe statt, welche Lichtsender und Lichtempfänger mindestens mittelbar mikromechanisch miteinander verbindet. Im Gegensatz zur makroskopischen Serienfertigung eines Sensors oder eines optischen Sende-Empfangsmoduls, wo bereits eine Genauigkeit von 100 $\mu$m nur mit aufwändigen und fehleranfälligen Methoden gelingt, ist eine Positionierungsgenauigkeit von 1 $\mu$m in der Mikrosystemtechnik ein völlig problemlos erreichbarer Standard. Somit werden Investitionskosten für Produktionshilfsmittel und Betreuungskosten eines aufwändigen und fehleranfälligen Justageprozesses eingespart. Toleranzen für transversale Positionsschwankungen etwa durch Verzug bei der Fixierung in der noch verbleibenden Z-Justage, durch Temperaturänderungen, einwirkende Kräfte und dergleichen müssen nicht vorgehalten werden, weil dies die relative Positionierung von Lichtsender und Lichtempfänger nicht mehr beeinflusst. Damit kann auch der Lichtfleck vergrößert werden, um die gesamte lichtempfindliche Fläche des Lichtempfängers auszunutzen, und dies verbessert das Signal-Rausch-Verhältnis und das Hochfrequenzverhalten.

Die gemeinsame Optik ist vorzugsweise als gemeinsame Linse ausgebildet. Damit wird eine besonders einfache und preisgünstige Optik verwendet und nicht etwa ein Objektiv aus mehreren Linsen oder dergleichen. Es ist auch insbesondere keine eigene Sendelinse vorhanden.

Der Lichtsender ist vorzugsweise im Brennpunkt der gemeinsamen Linse angeordnet. Dadurch entsteht ein scharfer und kleiner Sendelichtfleck. In vielen erfindungsgemäßen Anordnungen sind Lichtsender und Lichtempfänger längs der optischen Achse, also in Z-Richtung, zueinander versetzt. Dann ist zugleich der Lichtempfänger leicht aus der Brennebene verschoben, somit der Empfangslichtfleck durch Defokussierung vergrößert. Das wiederum führt zu dem vorteilhaften Effekt, dass ein größerer Anteil des reflektierten Sendelichts nicht wieder auf den Lichtsender fällt, somit mehr Nutzlicht detektiert wird.

Die gemeinsame Linse ist vorzugsweise als Mehrzonenlinse mit einer Sendezone und einer Empfangszone ausgebildet. Dadurch besteht die Möglichkeit, die Linseneigenschaften für Sendelicht und Empfangslicht gesondert zu optimieren. Die zusätzlichen Designfreiheitsgrade lassen sich nutzen, um möglichst wenig Empfangslicht auf dem Lichtsender zu verlieren und dennoch einen kleinen Sendelichtfleck zu behalten, soweit diese Ziele überhaupt miteinander vereinbar sind.

Noch bevorzugter ist die Sendezone zentral und die Empfangszone die Sendezone umgebend angeordnet. Dies ist besonders gut an die koaxiale Anordnung von Lichtsender und Lichtempfänger mit kleinerem Divergenzwinkel des Lichtsenders angepasst.

Die Sendezone weist bevorzugt eine kleinere Brennweite auf als die Empfangszone. Noch bevorzugter ist zugleich der Lichtsender in der Brennebene angeordnet. Die größere Brennweite der Empfangszone führt dann zu einer Defokussierung und damit einem aus herkömmlicher Sicht untypisch großen Empfangslichtfleck. Wegen der erfindungsgemäß hochgenauen XY-Positionierung ist das unproblematisch, weil auch der größere Empfangslichtfleck ohne Vorhalten von Toleranzen zuverlässig empfangen wird. Der Flächenanteil des Nutzlichts, das durch Auftreffen auf den Lichtsender verloren geht, ist somit besonders klein.

Die Empfangszone weist eine Kegelkomponente auf. Damit führt man absichtlich einen Abbildungsfehler ein, der bewirkt, dass Objektpunkte auf einen Kreisring abgebildet werden. Eine mögliche Linsenform ist eine von der Grundform her plankonvexe Linse, wobei aber die plane Seite im Bereich der Empfangszone eine zusätzliche Kegelkomponente erhält. Alternativ wird die Asphären-Seite modifiziert, indem von den Asphären-Parametern auch ungerade Polynomkoeffizienten genutzt werden.

Ein durch die Kegelkomponente erzeugtes ringförmiges Strahlprofil des Empfangslichts weist einen zentralen Bereich einer Größe auf, die dem Lichtsender entspricht. Die Größe bezeichnet eine charakteristische geometrische Größe wie den Radius oder die Fläche. Die Kegelkomponente wird also so ausgelegt, dass der aus dem Empfangslichtfleck erzeugte Ring den Lichtsender möglichst genau umgibt. Somit wird das Empfangslicht praktisch vollständig aus dem zentralen Bereich, in dem es in dem Lichtsender verloren ginge, auf den Lichtempfänger umgelenkt. Dies gilt vorzugsweise für Empfangslicht aus dem Unendlichen, und Empfangslicht eines näheren Objekts wird dann den Lichtsender nicht mehr vollständig meiden können. Auch der Empfangslichtanteil, der durch die Sendezone fällt, wäre noch gesondert zu betrachten. Dieser Anteil ist aber wegen der Divergenzeigenschaften von Sendelicht und Empfangslicht verhältnismäßig gering.

Lichtsender und Lichtempfänger sind bevorzugt voneinander höchstens um 300 $\mu$m beabstandet. Noch bevorzugter beträgt der Abstand sogar höchstens 200 $\mu$m oder höchstens 100 $\mu$m. Das sind Größenordnungen für Mikrosysteme, die zur Erinnerung bei der Sensorfertigung allein schon mit den typischen Toleranzen erreicht würden. Der Abstand bezieht sich noch bevorzugter auf die Z-Richtung. In einer Projektion in der Z-Richtung auf die XY-Richtung liegt in vielen Ausführungsformen der Lichtsender mit praktisch so gut wie keinem verbleibenden Abstand unmittelbar neben beziehungsweise im Wesentlichen zentriert in dem Lichtempfänger. In alternativen Ausführungsformen sind auch größere Abstände von höchstens 500 $\mu$m oder mehr vorstellbar.

Der Lichtempfänger weist bevorzugt eine Öffnung auf, in welcher der Lichtsender angeordnet ist. Der Lichtsender strahlt dann das Sendelicht aus dem Lichtempfänger heraus ab, mit einer im Wesentlichen gleichen Ebene für Senden und Empfangen. Die Öffnung bezieht sich zunächst nur auf die lichtempfindliche Fläche. Der Lichtsender kann also auf der Leiterplatte des Lichtempfängers in der lichtempfindlichen Fläche angeordnet sein. Eine eigene Leiterplatte ist aber auch denkbar. In dieser Ausführungsform liegen Lichtsender und Lichtempfänger auf einer Ebene, was die Fertigung und weitere Verarbeitung erleichtert.

Bevorzugt weist der Lichtempfänger eine Öffnung auf, hinter welcher der Lichtsender angeordnet ist. In dieser Ausführungsform strahlt der Lichtsender das Sendelicht durch den Lichtsender hindurch, so dass die Sendequelle in Z-Richtung gegenüber dem Lichtempfang nach hinten versetzt ist. Auch dies kann erst einmal nur die lichtempfindliche Fläche betreffen. Der Lichtsender hat dann eine geringere Bauhöhe, so dass er in der Öffnung verschwindet, was auch durch einen Sockel des Lichtempfängers erreichbar ist. Andere Möglichkeiten einer Anordnung des Lichtsenders hinter einer Öffnung des Lichtempfängers sehen eine Öffnung auch in der Leiterplatte des Lichtempfängers vor. Es genügt hier eine Öffnung von der Größe der reinen lichtemittierenden Fläche, der übrige Lichtsender kann hinter dem Lichtempfänger über die Öffnung hinausragen. So lässt sich eine kleinere Öffnung realisieren als in dem Fall, in dem der Lichtsender in der Öffnung sitzt.

Die Öffnung ist bevorzugt höchstens 300 $\mu$m groß. Noch bevorzugter ist die Öffnung sogar höchstens 200 $\mu$m

oder höchstens 100 µm groß. Erneut bezieht sich die Größe auf eine charakteristische geometrische Abmessung wie den Durchmesser, die Fläche oder eine Kantenlänge. Entsprechend klein bleibt der zentrale Bereich des Lichtempfängers, der kein Empfangslicht registrieren kann, und damit der Nutzlichtverlust. In alternativen Ausführungsformen kann die Öffnung aber auch größer sein, also beispielsweise höchstens 500 µm oder noch mehr. Insbesondere ein SPAD-Detektor kann die dafür erforderliche Größenordnung der Ausdehnung von 1 mm und mehr ohne Weiteres mitbringen.

Bei Anordnung des Lichtsenders hinter der Öffnung ist vorzugsweise zwischen Lichtsender und Lichtempfänger ein Lichtführungselement angeordnet ist, welches das Sendelicht in die Öffnung führt, so dass die Öffnung die faktische Lichtquelle ist. Solche Ausführungsformen sind ein Beispiel für eine nur mittelbare mikromechanische Verbindung zwischen Lichtsender und Lichtempfänger mit einem gewissen Abstand dazwischen. Das Licht des Lichtsenders wird von dem Lichtführungselement in die Öffnung geleitet, so dass trotz des Abstands zwischen Lichtsender und Lichtempfänger praktisch alles Sendelicht aus einer faktischen, virtuellen Lichtquelle in der Öffnung oder in deren unmittelbarer Nähe austritt. In diesem Zusammenhang sollte der Begriff virtuell nicht mit einem virtuellen Bild einer optischen Abbildung verwechselt werden. Es geht vielmehr darum, dass sich das Sende-Empfangsmodul für alle praktischen Belange wie eines verhält, bei dem der Lichtsender in der Öffnung oder jedenfalls ganz dicht dahinter angeordnet ist.

Durch den größeren Abstand des Lichtsenders zu der Öffnung wird eine Reihe von Vorteilen erzielt. Die Öffnung selbst kann kleiner ausgeführt werden. Es geht deshalb weniger Empfangsfläche verloren, was das Signal-Rauschverhältnis und die Reichweite verbessert. Außerdem können Lichtsender mit größeren Abmessungen verwendet werden, beispielsweise auch Kantenemitter. Bei einem ebenfalls möglichen VCSEL-Lichtsender ist das Problem der Abmessungen meist geringer. Weiterhin wird das optische Übersprechen reduziert und damit unter anderem eine bessere Nahbereichserfassung erreicht. Denn Sendelichtanteile, die beispielsweise aufgrund flacher Abstrahlwinkel nicht in den Überwachungsbereich gelangen würden, werden schon durch das Lichtführungselement und die Öffnung abgefangen, so dass sie das Empfangselement nie erreichen.

Das Lichtführungselement weist vorzugsweise ein Lichtleitelement auf. Ein Lichtleiter kann aus Vollmaterial hergestellt sein und auf innerer Totalreflexion beruhen, oder es kann zusätzlich innen verspiegelt oder als hohler Lichtwellenleiter mit innerer Verspiegelung ausgebildet sein. Alternativ erzeugt das Lichtführungselement ein Bild der Lichtquelle in oder vor der Öffnung. Dazu ist vorzugsweise eine Linse, insbesondere Mikrolinse vorgesehen. Das (reelle) Bild der Lichtquelle in der Öffnung ist von außen betrachtet der faktische Ursprung des Sendelichts.

Der Lichtsender ist bevorzugt auf dem Lichtempfänger angeordnet. Das ist eine alternative Anordnung, wenn der Lichtempfänger keine Öffnung aufweisen soll. Beispielsweise ist ein kleiner Sockel auf dem Lichtempfänger für den Lichtsender vorgesehen. Die Abstände sind wiederum nur auf der Skala der Mikrosystemtechnik im Bereich von einigen zehn, höchstens hundert Mikrometern.

Der gemeinsamen Optik ist bevorzugt eine Feldblende zugeordnet. Diese Feldblende ist vorzugsweise zwischen gemeinsamer Linse und Lichtsender beziehungsweise Lichtempfänger angeordnet. Durch die Feldblende wird seitliches Fremdlicht abgeschirmt, das kein remittiertes Nutzlicht sein kann und das Signal-Rauschverhältnis nur verschlechtert. Dabei werden Fremdlichtreduktionen erreicht, die durchaus einen Faktor zehn und mehr betragen können. Abgesehen von der verbesserten Fremdlichtrobustheit und Reichweite erzeugt Fremdlicht in manchen Lichtempfängern, beispielsweise bei SPADs (Single-Photon Avalanche Diode), eine unnötige Leistungsaufnahme und Wärmeentwicklung, was durch die Feldblende ebenfalls verhindert wird. Bei Ausführungsformen mit einem Lichtführungselement kann das Sendelicht nicht nur in die Öffnung, sondern weiter durch die Feldblende geführt werden, um deren Nutzen noch zu optimieren. Insbesondere wird dazu ein reelles Bild der Lichtquelle im Bereich der Blendenöffnung erzeugt.

Die gemeinsame Optik, insbesondere deren Empfangszone, ist bevorzugt dafür ausgebildet, das Empfangslicht nur bis auf eine Ausdehnung einer Blendenöffnung der Feldblende zu fokussieren. Eine Feldblende hat die soeben erläuterten Vorteile. Bei einem nahen Objekt jedoch lässt die Feldblende praktisch nur noch zentrales Licht passieren, das auf den Lichtsender fokussiert und für die Detektion verloren ist. Somit wäre das erfindungsgemäße Sende-Empfangsmodul mit Feldblende im Nahbereich blind. Dem lässt sich durch Defokussieren der gemeinsamen Optik beziehungsweise der Empfangszone entgegenwirken. Der Empfangsstrahlengang weist dann eine breitere Taille vorzugsweise gerade entsprechend der Blendenöffnung auf, und auf Ebene des Lichtempfängers bildet sich kein scharfer Fokuspunkt aus, sondern ein größerer Lichtfleck, der mit ausreichendem Anteil die lichtempfindliche Fläche und nicht den Lichtsender trifft.

Die gemeinsame Optik weist bevorzugt Strahlablenkungseigenschaften auf, um eine Verkippung des Empfangsstrahlengangs zum Sendestrahlengang auszugleichen. Das eignet sich für Ausführungsformen, in denen Lichtsender beziehungsweise faktische Lichtquelle und Lichtempfänger selbst noch nicht koaxial, sondern nebeneinander angeordnet sind. Nach außen hin verhält sich das Sende-Empfangsmodul dann koaxial, da eine durch die Nebeneinanderordnung verursachte, ohnehin nur geringfügige Verkippung von Empfangs- zu Sendestrahlengang durch die gemeinsame Optik kompensiert ist. Die gemeinsame Optik, genauer deren Empfangszone, hat dafür beispielsweise eine Keilform beziehungsweise prismatische Eigenschaften, so dass die fokussierenden Eigenschaften durch ein Verkippen des Empfangsstrahlengangs überlagert werden, welche die Verkippung zum Sendestrahlengang ausgleicht.

Zwischen Lichtsender und gemeinsamer Optik ist vorzugsweise ein Sendetubus angeordnet. Dadurch wird ein optisches Übersprechen in dem Sende-Empfangsmodul verhindert. Zwar schirmt der Sendetubus zugleich auch den Anteil des Empfangslichts ab, der die gemeinsame Optik im Bereich des Sendetubus trifft. Solches Licht würde aber ohnehin fast vollständig auf den Lichtsender fallen und damit zur Detektion nicht beitragen.

Dem Lichtsender ist bevorzugt ein optisches Element vorgeordnet, welches in Richtung auf den Lichtsender eintreffendes Empfangslicht auf den Lichtempfänger umlenkt. Das optische Element stört beim Abstrahlen von Sendelicht wegen dessen Divergenzwinkel nicht. Empfangslichtstrahlen, die seitlich von außen auf den Lichtsender fallen würden, werden aber wieder nach außen zurück- und so auf den Lichtempfänger umgelenkt. Das ist also eine weitere Möglichkeit, den detektierbaren Anteil des Empfangslichts zu erhöhen.

In bevorzugter Weiterbildung ist ein optoelektronischer Sensor mit mindestens einem erfindungsgemäßen Sende-Empfangsmodul vorgesehen. Der Sensor weist bevorzugt eine Auswertungseinheit auf, die dafür ausgebildet ist, aus einem Empfangssignal des Lichtempfängers eine Lichtlaufzeit und daraus einen Abstand zu einem erfassten Objekt zu bestimmen. Ein solches lichtlaufzeitmessendes oder ToF-System wird beispielsweise als Lichttaster oder Laserscanner eingesetzt. Alternativ kann aber auch auf die Lichtlaufzeitmessung verzichtet werden, wie in einfachen Lichttastern, Lichtschranken, Lichtgittern oder Laserscannern, die nur eine Winkel- und keine Entfernungsauflösung besitzen.

In einem solchen Sensor können auch vorteilhafterweise mehrere Sende-Empfangsmodule eingesetzt sein, um ein Mehrstrahlsystem zu bilden. Beispiele dafür sind Lichtgitter oder Laserscanner mit mehreren Scanebenen als Annäherung an eine 3D-Abtastung. Insbesondere können mehrere Sende-Empfangsmodule derselben gemeinsamen Optik zugeordnet sein, um so Komponenten und Fertigungsaufwand einzusparen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1 eine schematische Schnittdarstellung eines optoelektronischen Sensors mit einem Sende-Empfangsmodul;

Fig. 2 eine schematische Darstellung eines Sende-Empfangsmoduls mit einem Lichtsender hinter einem Loch des Lichtempfängers sowie mit einer Mehrzonenlinse;

Fig. 3 eine schematische Darstellung ähnlich Figur 2, jedoch mit dem Lichtsender in einem Loch des Lichtempfängers;

Fig. 4 eine schematische Darstellung ähnlich Figur 2, jedoch mit Lichtsender auf dem Lichtempfänger;

Fig. 5 eine schematische Darstellung eines Sende-Empfangsmoduls mit einem Lichtsender hinter einem Loch des Lichtempfängers ähnlich Figur 2, jedoch mit einem Lichtführungselement dazwischen;

Fig. 6 eine schematische Darstellung ähnlich Figur 5, bei dem das Lichtführungselement als hohler Lichtwellenleiter ausgeführt ist;

Fig. 7 eine schematische Darstellung ähnlich Figur 5, bei dem das Lichtführungselement reelles Bild des Lichtsenders erzeugt

Fig. 8 Spotdiagramme eines Lichtflecks, den eine Linse mit Kegelkomponente erzeugt, bei unterschiedlicher Defokussierung;

Fig. 9 eine schematische Darstellung des Empfangsstrahlengangs an einer Linse mit Kegelkomponente;

Fig. 10 Spotdiagramme eines Lichtflecks einer Linse mit Kegelkomponente bei verschiedenen Objektentfernungen;

Fig. 11 eine schematische Darstellung eines Sende-Empfangsmoduls gemäß Figur 2 mit zusätzlicher Feldblende;

Fig. 12 eine schematische Darstellung eines Sende-Empfangsmoduls gemäß Figur 5 mit zusätzlicher Feldblende;

Fig. 13a-b eine schematische Darstellung des Empfangsstrahlengangs eines Sende-Empfangsmoduls gemäß Figur 11 bei einem fernen beziehungsweise einem nahen Objekt;

Fig. 14 eine schematische Darstellung eines Sende-Empfangsmoduls mit einem zusätzlichen Lichtempfänger für den Nahbereich;

Fig. 15 eine schematische Darstellung eines Sende-Empfangsmoduls mit einer Variante einer koaxialen Anordnung;

Fig. 16 eine schematische Darstellung eines Sende-Empfangsmoduls mit der Variante einer koaxialen Anordnung gemäß Figur 15 bei seitlicher Abstrahlung des Lichtsenders;

Fig. 17 eine schematische Darstellung eines Sende-Empfangsmoduls mit abschirmendem Sendetubus;

Fig. 18 eine schematische, nicht maßstäbliche Darstellung einer Anordnung mehrerer Sende-Empfangsmodule mit einer gemeinsamen Linse;

Fig. 19 eine schematische Darstellung des Strahlengangs an einem SendeEmpfangsmodul mit einem vorgeordneten optischen Element zur Umlenkung von Empfangslicht auf den Lichtempfänger; und

Fig. 20  eine schematische Darstellung ähnlich Figur 17, jedoch mit veränderter Geometrie des vorgeordneten optischen Elements.

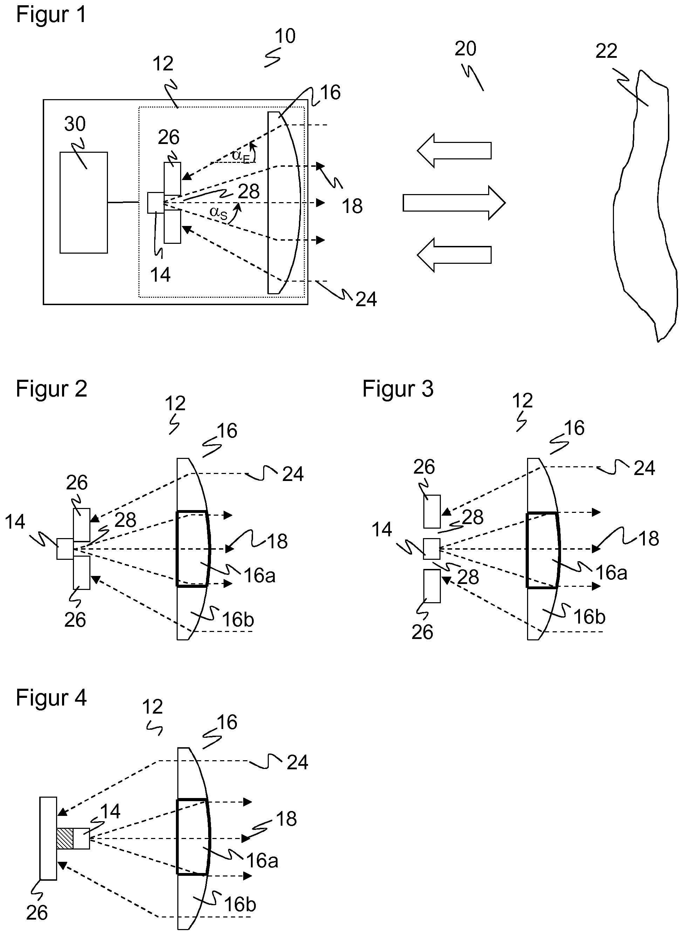

Figur 1 zeigt eine schematische Schnittdarstellung eines optoelektronischen Sensors 10. Dargestellt ist ein Lichttaster, aber das ist nur ein Beispiel zur Erläuterung, es sind auch andere Sensoren möglich, wie Lichtschranken, Lichtgitter oder Laserscanner.

Ein Sende-Empfangsmodul 12 weist einen Lichtsender 14 auf, der über eine gemeinsame Sende- und Empfangsoptik 16 ein Sendelichtbündel 18 in einen Überwachungsbereich 20 aussendet. Trifft das Sendelichtbündel 18 dort auf ein Objekt 22, so kehrt ein Teil des Lichts als remittiertes Empfangslichtbündel 24 zu dem Sende-Empfangsmodul 12 zurück und wird dort von der gemeinsamen Sende- und Empfangsoptik 16 auf einen Lichtempfänger 26 gebündelt. Der Lichtempfänger 26 weist in dieser Ausführungsform eine zentrale Öffnung 28 beziehungsweise ein Loch auf, hinter welchem der Lichtsender 14 sitzt und durch welches das Sendelichtbündel 18 ausgesandt wird. Das wird in anderen Ausführungsformen variiert. Jedenfalls befinden sich Lichtsender 14 und Lichtempfänger 26 in direkter räumlicher Nähe zueinander und sind mikromechanisch aneinander befestigt. Die zweiteilige Darstellung des Lichtempfängers 26 ist der Schnittansicht geschuldet, in einer Draufsicht würde man erkennen, dass der Lichtempfänger 26 zusammenhängt und die zentrale Öffnung 28 aufweist. Es sind aber auch Ausführungsformen denkbar, in denen der Lichtempfänger 26 nicht zusammenhängt. Es umgeben dann zwei oder mehr separierte lichtempfindliche Flächen die Öffnung 28, die einander zumindest an Ecken oder Kanten fast berühren können, aber nicht müssen. Die Anordnung des Sende-Empfangsmoduls 12 ist koaxial, Lichtsender 14 und Lichtempfänger 26 liegen also auf derselben optischen Achse. Der Strahlungsweg ist nicht gefaltet, es gibt insbesondere keine Teiler- oder Umlenkspiegel, welche die koaxiale Anordnung erst herstellen, wobei ein gemeinsamer Umlenkspiegel, der sowohl den Sende- als auch den Empfangspfad betrifft, beispielsweise zur Bauraum- oder Montageoptimierung, grundsätzlich denkbar bleibt.

Der Lichtsender 14 kann als LED oder Laser, insbesondere als VCSEL-Laser oder kantenemittierende Laserdiode ausgeführt sein. Der Lichtempfänger 26 ist beispielsweise eine PIN-Diode, eine APD (Avalanche Photo Diode, Lawinenphotodiode) oder eine Einzelphotonen-APD (SPAD, Single-Photon APD) beziehungsweise eine Mehrfachanordnung davon. Ein Vorteil einer SPAD ist neben ihrer außergewöhnlich hohen Sensitivität auch die Möglichkeit, sie rasch empfindlich oder unempfindlich zu schalten ("active quenching", Time Gating, Zeitfenster, Anpassung der Bias-Spannung). Dadurch können Störanteile, die durch optisches oder elektrisches Übersprechen entstehen, sehr effektiv ausgeblendet werden, indem die empfindlichen Zeitfenster so eingestellt werden, dass das Übersprechsignal schon abgefallen, das Messsignal auch aus nahen Abständen aber noch nicht zurückgekommen ist. Außerdem können SPAD-Anordnungen ohne Weiteres in einer Baugröße von 1 mm und mehr eingesetzt werden, was für große Empfangslichtflecken in einigen der noch zu erläuternden Ausführungsformen Vorteile verspricht.

Eine Auswertungseinheit 30 steuert den Lichtsender 14 und wertet das Empfangssignal des Lichtempfängers 26 aus, um das Objekt 22 zu erfassen. Die Auswertung kann beispielsweise ein Lichtlaufzeitverfahren beinhalten, um den Abstand zu dem Objekt 22 zu messen, etwa ein an sich bekanntes Einzelpuls-, Mehrpuls- oder Phasenverfahren. Die Auswertungseinheit 30 steht auch stellvertretend für weitere mögliche elektronische Komponenten des Sensors 10, auf die nicht näher eingegangen wird.

Die gemeinsame Optik 16 ist in Figur 1 als eine gemeinsame Linse ausgebildet. Das bedeutet, dass es sich um ein vorzugsweise einstückiges gemeinsames Element ohne mechanische Trennung handelt, das sowohl für das Sendelichtbündel 18 als auch das Empfangslichtbündel 24 zuständig ist. Die gemeinsame Linse ist beispielsweise aus Kunststoff oder aus Glas hergestellt. Eine Glaslinse ist besonders für industrielle Anwendungen vorteilhaft, weil damit für das Sendelichtbündel 18 ein ausreichend kleiner Temperaturgang erzielt werden kann.

Der Divergenzwinkel $\alpha_S$ des Lichtsenders 14 und damit des Sendelichtbündels 18 ist kleiner als der Winkel $\alpha_E$ des Empfangslichtbündels 24. Das führt dazu, dass ausreichend Empfangslicht auf den Lichtempfänger 26 fällt, obwohl ein Teil davon in der Öffnung und damit auf dem Lichtsender 14 beziehungsweise in anderen Ausführungsformen durch einen Schatten des Lichtsenders 14 verlorengeht. Dies kann anhand der schematischen Strahlverläufe und der beiden Winkel $\alpha_S$, $\alpha_E$ in Figur 1 leicht nachvollzogen werden.

Zudem soll an dieser Stelle ein Zahlenbeispiel gegeben werden. Als Empfangsoptik 16 wird dafür beispielhaft eine gemeinsame Linse angenommen. Anders als viele später folgende Beispiele hat diese Linse im Zentrum, wo das Sendelichtbündel 18 austritt, gleichbleibende Eigenschaften wie außerhalb, etwa eine überall gleiche Brennweite. Die Linse ist als Plan-Asphäre aus Glas ausgeführt, mit einer Mittendicke von 13 mm, einem Brechungsindex n=1.515, einer Brennweite f=30 mm und einer nutzbaren Apertur von 35 mm, wobei von den Asphären-Parametern der Radius r, der Konus k und die beiden geraden Polynomkoeffizienten $a_4$ und $a_6$ verwendet sind. Der Abstrahlwinkel $\alpha_S$ des Lichtsenders 14 beträgt $\pm 15°$, und der maximale Winkel $\alpha_E$ des Empfangslichtbündels 24 beträgt $\pm 38°$. Der Lichtsender 14 ist im Brennpunkt der Linse angeordnet. Die Öffnung 28 in dem Lichtempfänger 26 hat einen Durchmesser von 130 $\mu m$, bei einer mechanischen Dicke des Chips des Lichtempfängers 26 von 150 $\mu m$, die auch die Tiefe der Öffnung 28 bestimmt. Der Lichtsender 14 hat Abmessungen von 300 $\mu m$, wobei 50 $\mu m$ davon auf die lichtemittierende Fläche entfallen. Daraus ergibt sich im Übrigen auch der erforderliche ser: 50 $\mu$m + 2 * tan(15°)*150 $\mu$m = 130um. Die resultierende Größe des Empfangslichtflecks auf dem Lichtempfänger 26 ist dann 2 * tan(38°) * 150um = 235 $\mu$m. Folglich trifft ein Anteil von etwa $(235^2\text{-}130^2)/235^2$ = 70% des Empfangslichtbündels 24 nicht die Öffnung 28 und wird detektiert. Durch ein leichtes Defokussieren des Sendelichtbündels 18 kann die Spotgröße weiter erhöht werden und eine noch größere Empfangseffizienz von mehr als 70% erreicht werden.

Figur 2 zeigt eine weitere Ausführungsform eines Sende-Empfangsmoduls 12. Der Aufbau entspricht weitgehend der Figur 1. Allerdings ist die gemeinsame Optik 16 nun nicht mehr als einheitliche Linse mit überall gleichen Eigenschaften ausgestaltet. Vielmehr weist die Linse als Mehrzonenlinse nunmehr eine Sendezone 16a als zentralen Linsenteil für das Sendelichtbündel 18 und eine umgebende Empfangszone 16b als äußeren Linsenteil für das Empfangslichtbündel 24 auf. Auch die Mehrzonenlinse ist vorzugsweise eine einzige, einstückige Linse, in der aber je nach Zone unterschiedliche optische Eigenschaften verwirklicht sind, wobei die Zonen vorzugsweise koaxial angeordnet sind. Vorsichtshalber sei erwähnt, dass natürlich auch ein Teil des Empfangslichtbündels 24 zentral auf die Sendezone 16a trifft. Dieser Anteil verschwindet aber im Wesentlichen in der Öffnung 28 beziehungsweise auf dem Lichtsender 14, und ist damit für die Detektion verloren und bleibt deshalb in dieser Beschreibung an vielen Stellen unbeachtet.

Durch die Mehrzonenlinse kann also die Linsenwirkung für Sendelichtbündel 18 und Empfangslichtbündel 24 unterschiedlich eingestellt werden. Insbesondere kann die Brennweite der Sendezone 16a ungleich der Brennweite der Empfangszone 16b gewählt werden. Vorteilhaft ist die Wahl einer kleineren Brennweite in der Sendezone 16a, um den Empfangslichtfleck des Empfangslichtbündels 24 auf dem Lichtempfänger 26 zu vergrößern. Dadurch wird dann der relative Anteil des Empfangslichtbündels 24 geringer, der in der Öffnung 28 beziehungsweise auf dem Lichtsender 14 verlorengeht. Mit der gleichen Überlegung sollte der Lichtempfänger 26 nicht im Fokus der Empfangszone 16b sitzen, um den untypisch großen Empfangslichtfleck zu erzielen. In einer herkömmlichen Betrachtung käme eine solche Defokussierung und damit Vergrößerung des Empfangslichtflecks nicht in Frage. Vielmehr wird dort eine scharfe Abbildung mit kleinem Empfangslichtfleck und umgebenden freien Randbereichen auf der Empfangsfläche des Lichtempfängers 26 angestrebt, um noch Toleranzen vorzuhalten. Erfindungsgemäß sind solche Toleranzen nicht erforderlich, weil die XY-Justage von Lichtsender 14 zu Lichtempfänger 26 mit extrem hoher Genauigkeit schon vorab erreicht ist.

Figur 3 zeigt eine weitere Ausführungsform des Sende-Empfangsmoduls 12. Im Unterschied zu Figur 2 wird hier der Lichtsender 14 nicht hinter, sondern in der Öffnung 28 angeordnet. Beides hat Vor- und Nachteile. In der Anordnung nach Figur 2 kann die Öffnung 28 relativ klein bleiben, weil nur die lichtemittierende Fläche des Lichtsenders 14 durch die Öffnung 28 strahlen muss. Im obigen Zahlenbeispiel zu Figur 1 waren das 50 $\mu$m im Vergleich zu einer Gesamtabmessung des Lichtsenders 14 von 300 für den außer der lichtemittierenden Fläche auch Verbindungsbereiche für die elektronische Kontaktierung erforderlich sind. Außerdem wirkt die Öffnung 28 als Blende zur Begrenzung des Abstrahlwinkels $\alpha_s$. In der Anordnung nach Figur 3 muss demnach die Öffnung 28 groß genug sein, um den gesamten Lichtsender 14 aufzunehmen. Dafür sind hier alle Elemente in einer Ebene, was Chipdesign und -fertigung vereinfacht.

Figur 4 zeigt eine weitere Ausführungsform des Sende-Empfangsmoduls 12, die ohne Öffnung 28 auskommt. Stattdessen wird der Lichtsender 14 zentral auf dem Lichtempfänger 26 angeordnet. Das kann die gemeinsame Fertigung eines Chips für Lichtsender 14 und Lichtempfänger 26 vereinfachen, weil keine Öffnung 28 notwendig ist. Allerdings schattet der Lichtsender 14 einen vergleichsweise großen Anteil des Empfangslichtbündels 24 ab und beansprucht auch selbst Platz für seine Kontaktierung. Es sind daher eher größere Empfangslichtflecke erforderlich, die sich etwa mit einer APD mit Abmessungen von 500 $\mu$m nur noch knapp realisieren lassen. Daher kann es vorteilhaft sein, einen größeren Lichtempfänger 26 einzusetzen, beispielsweise einen SPAD-Detektor mit Abmessungen in der Größenordnung von 1 mm.

Bei den Ausführungsformen gemäß Figur 2 und 3 mit Lichtsender 14 in der Öffnung 28 können sich Nachteile ergeben, speziell im Hinblick auf den erforderlichen Durchmesser der Öffnung 28. Optisch wäre es ideal, wenn die Öffnung 28 gerade dem Durchmesser des Strahlenbündels des Sendelichts 18 entspricht. Tatsächlich ist aber aus verschiedenen Gründen eine größere Öffnung 28 erforderlich. Das betrifft einmal bei Anordnung des Lichtsenders 14 in der Öffnung 28 wie in Figur 3 aus offensichtlichen Gründen die Dimensionierung des Lichtsenders 14, dessen optisch aktive Fläche kleiner ist als die Gesamtausdehnung. Aber auch bei Anordnung des Lichtsenders 14 hinter der Öffnung 28 gibt es noch elektrische Leiterbahnen oder weiteres Halbleitermaterial, das den Lichtempfänger 26 nicht direkt kontaktieren soll. Ein weiteres Beispiel sind Kantenemitter als Lichtsender 14. Der seitliche Lichtaustritt erfordert eine verkippte Anordnung zur Fläche des Lichtempfängers 26, so dass Lichtsender 14 und Lichtempfänger 26 nicht direkt aufeinander angeordnet werden können wie in Figur 2.

In direkter räumlicher Nähe von Lichtsender 14 und Lichtempfänger 26, möglicherweise sogar einer Berührung, können weiterhin Ströme beziehungsweise elektromagnetische Felder vom Lichtsender 14 in den Lichtempfänger 26 übergehen. Ein solches elektrisches Übersprechen führt zu verfälschten Empfangssignalen und tritt besonders bei hohen Frequenzen in der Größenordnung von 1 GHz und mehr auf, die aber gerade bei Lichtlaufzeitmessungen durchaus erwünscht sind.

Ein weiterer Aspekt ist das optische Übersprechen. Einiges Sendelicht wird von dem Lichtsender 14 so abgestrahlt, dass es nicht genutzt werden kann, weil es beispielsweise in einem großen Divergenzwinkel abgestrahlt wird.

Dieser Lichtanteil beeinträchtigt die Sendeleistung kaum nachteilhaft, aber das Licht kann in den Lichtempfänger 26 gelangen und dort das eigentliche Empfangssignal verfälschen. Eine Anordnung wie in Figur 2 kann das Übersprechen begünstigen, etwa über die Innenfläche der Öffnung 28.

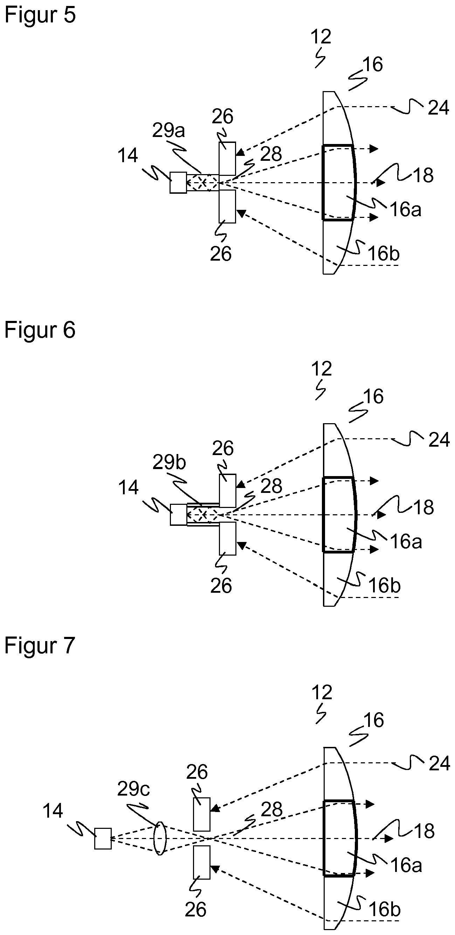

Die Figuren 5 bis 7 zeigen Ausführungsformen mit einem zusätzlichen Lichtführungselement 29a-c und einem gewissen Abstand zwischen Lichtsender 14 und Lichtempfänger 26, mit denen die genannten Probleme behoben oder wenigstens abgemildert werden. Diese Ausführungsformen beruhen auf dem gemeinsamen Gedanken, den Lichtsender 14 physisch von dem Lichtempfänger 26 zu entfernen. Effektiv bleibt aber die Öffnung 28 der Ausgangspunkt des Sendelichts 18 oder die faktische Lichtquelle, weil das Sendelicht 18 von dem Lichtsender 14 mittels Lichtführungselement 29a-c in die Öffnung 28 geführt wird. Weiterhin sind Lichtsender 14 und Lichtempfänger 26 über Zwischenbauteile mittelbar mikromechanisch verbunden, so dass die Justagevorteile erhalten bleiben.

Für die konkrete Wahl des Lichtführungselements 29a-c, mit dem eine faktische oder virtuelle Lichtquelle in unmittelbarer Nähe des Lichtempfängers erzeugt wird, zeigen die Figuren 5 bis 7 drei Beispiele. In Figur 5 ist das Lichtführungselement 29a ein Lichtleiter, der als Volumenelement aus lichtdurchlässigem Material wie Glas oder Kunststoff gefertigt ist und das Sendelicht 18 durch Totalreflexion leitet. In Figur 6 ist das Lichtführungselement 29b ein hohler Körper, der innen verspiegelt ist. Ein Volumenelement kann alternativ auch eine Verspiegelung aufweisen.

In Figur 7 ist das Lichtführungselement 29c als abbildendes Element ausgestaltet, in diesem Fall eine Sammellinse, vorzugsweise eine Mikrolinse. Dadurch wird ein reelles Bild des Lichtsenders 14 beziehungsweise von dessen lichtemittierender Fläche in der Öffnung 28 erzeugt. Das Bild kann statt der Lage in Figur 7 auch knapp vor oder hinter der Öffnung 28 angeordnet sein

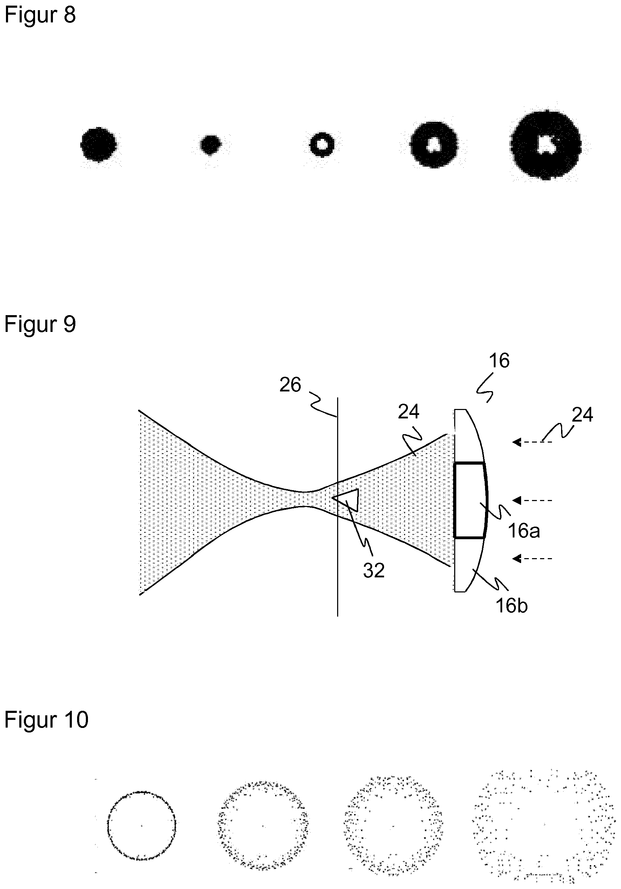

Die Figuren 8 bis 11 illustrieren eine erfindungsgemäße Linse, die als gemeinsame Optik 16 dient, mit einer zusätzlichen Kegelkomponente. Die Kegelkomponente betrifft die Empfangszone 16b. Bei einer Plan-Asphäre kann dazu die Planseite eine Kegelform bekommen, also als Axikon ausgebildet werden. Eine andere Möglichkeit ist, die Asphären-Seite als sogenannte "odd asphere" auszuführen. Dort sind in der Polynomdarstellung der Pfeilhöhe nicht mehr nur gerade Potenzen des Radius vertreten, sondern auch ungerade Potenzen. Am einfachsten wird dazu der Polynomkoeffizient $a_1$ herangezogen, der eine Pfeilhöhe proportional zu $a_1$ * Abstand zur Linsenmitte bewirkt, also die gewünschte Kegelform. Es können aber auch andere ungerade Polynomkoeffizienten genutzt werden, um die Linsenkontur entsprechend zu modifizieren.

Hierzu wird nachfolgend ergänzend die Asphären-Formel wiedergegeben:

$$z(r) = \frac{\rho r^2}{1+\sqrt{1-(1+k)(\rho r)^2}} + \sum_{i=2}^{n} a_{2i} r^{2i} + \sum_{i=1}^{m} a_{2i+1}|r|^{2i+1},$$

mit: $z$ Pfeilhöhe, $r$ Abstand senkrecht zur Achse oder Einfallshöhe, $p$ Scheitelkrümmung (Scheitelradius $R = 1/\rho$), $k$ konische Konstante, $a_{2i}$ $a_{2i+1}$ gerade beziehungsweise ungerade Koeffizienten des Korrekturpolynoms, max(2$n$, 2$m$ + 1) Grad des Polynoms.

Durch Einbringen einer Kegelkomponente, sei es auf der Planseite, über ungerade Polynomkoeffizienten oder eine ganz andere Linsenform, wird erreicht, dass ein Objektpunkt nicht mehr auf einen Bildpunkt auf den Lichtempfänger 26 abgebildet wird, sondern auf einen schmalen Kreisring. Die Linse mit Kegelkomponente erzeugt also ein ringförmiges Strahlprofil, dessen Kontur von der Fokuslage abhängt.

Dies ist in Figur 8 für Spotprofile in unterschiedlichen Fokuslagen illustriert. Das mittlere Spotprofil entspricht einer Anordnung im Fokus, wo idealisiert ein scharfer Kreisring entsteht. Bewegt man die Empfangsebene näher an die Linse heran, in Figur 8 nach rechts, so entsteht ein "Donut" oder Torus mit einer Art Lichtloch in der Mitte. In der Gegenrichtung schließt sich der Lichtfleck und vergrößert sich mit zunehmender Entfernung von der Fokuslage. Durch Vorzeichenwechsel des Polynomkoeffizienten $a_1$ können die Verhältnisse horizontal gespiegelt werden, es besteht also dadurch eine Wahlmöglichkeit, auf welcher Seite der scharfen Fokuslage sich jeweils ein Torus mit Lichtloch oder ein geschlossener Lichtfleck ausbildet.

Figur 9 illustriert den Strahlengang noch einmal in einer Schnittansicht. Durch die Kegelkomponente der Linse der gemeinsamen Optik 16 entsteht ein ringförmiges Strahlprofil mit einem Lichtloch 32, das sich nur zu einer Richtung der scharfen Fokuslage hin zeigt. Die eingezeichnete Empfangsebene der Lichtempfängers 26 entspricht dem scharfen Kreisring in der Mitte von Figur 8. Die Zuordnung zu den Spotprofilen der Figur 8 bei Bewegen der Empfangsebene nach rechts oder links werden ebenfalls unmittelbar verständlich. Wie schon erläutert, kann das Lichtloch 32 in Figur 9 durch Vorzeichenwechsel von $a_1$ quasi an der eingezeichneten Empfangsebene gespiegelt werden.

Die Anordnung gemäß Figur 9 mit dem Lichtempfänger 26 in der Ebene des scharfen Kreisrings ist besonders bevorzugt, weil dann alles Licht des Empfangslichtbündels 24 gerade noch außerhalb der Öffnung 28 oder, je nach Ausführungsform, des Schattens des Lichtsenders 14 fällt. Dafür sollte zugleich die Kegelkomponente so ausgelegt werden, dass der erzeugt Kreisring einen Durchmesser hat, mit dem er die Öffnung 28 umgibt. Für den einfachsten Fall, dass die Kegelform über $a_1$ erzeugt ist, kann der Kreisdurchmesser grob zu $2f_E|a_1|(n - 1)$ abgeschätzt werden, wobei

$f_E$ die nominelle Brennweite der Empfangszone 16b und $n$ die Linsenbrechzahl ist.

Als konkretes Zahlenbeispiel sei für $a_1$ der Wert -0,005 gewählt. Es sei nochmals erwähnt, dass dies nur die Empfangszone 16b betrifft, in der Sendezone 16a bleiben vorzugsweise die ungeraden Polynomkoeffizienten auf dem Wert 0. Die sonstigen Abmessungen und Parameter einschließlich der übrigen Aspährenparameter seien dieselben wie im obigen Zahlenbeispiel zu Figur 1 mit Brennweite $f_E$ von 30 mm und eine Linsenbrechzahl $n$ von 1,5. Dann ergibt sich aus der Abschätzung des vorigen Absatzes ein Kreisring mit einem Durchmesser von ungefähr 2 * 30 mm * 0,005 * (1,5-1) = 150 $\mu$m. Damit kann in Figur 2 die Öffnung 28 von 130 $\mu$m umgeben werden.

In einem alternativen Zahlenbeispiel wird bei ansonsten gleichen Werten für $a_1$ der Wert +0,01 gewählt. Dann wird der Kreisdurchmesser 2 * 30 mm * 0,01 * (1,5-1) = 300 $\mu$m. Dies genügt gerade, um die größere Öffnung 28 in Figur 3 oder den Schatten des Lichtsenders 14 in Figur 4 mit Abmessungen von jeweils 300 $\mu$m zu umgeben, bei Bedarf kann ein etwas größeres $a_1$ gewählt werden.

In diesen Zahlenbeispielen ist durch das Vorzeichen von $a_1$ Sorge getragen, dass nicht nur Objekte 22 im Unendlichen, sondern auch näher kommende Objekte 22 einen Lichtfleck erzeugen, der weiterhin auf die lichtempfindliche Fläche des Lichtempfängers 26 trifft und nicht vollkommen in der Öffnung 28 oder auf dem Lichtsender 14 verschwindet. Bei falscher Anordnung oder Vorzeichenwahl könnte dies nämlich leicht passieren, mit der Folge eines mehrere Meter großen Totbereichs in der Nähe des Sende-Empfangsmoduls 12.

Figur 10 zeigt Spotdiagramme bei unterschiedlichen Objektentfernungen für den Fall einer sinnvollen Wahl von $a_1$ wie erläutert. Dabei sind die dargestellten Objektentfernungen, von links nach rechts, unendlich, 8 m, 4 m und 2 m. Es ist leicht zu erkennen, dass der Empfangslichtfleck auf dem Lichtempfänger 26 zwar kein scharfer Kreisring für ein Objekt 22 im Unendlichen bleibt, weiterhin aber so gut wie kein Licht ins Zentrum gelangt, und die durch Unschärfe vergrößerten Empfangslichtflecke näherer Objekte 22 nimmt der Lichtempfänger 26 weiterhin auf.

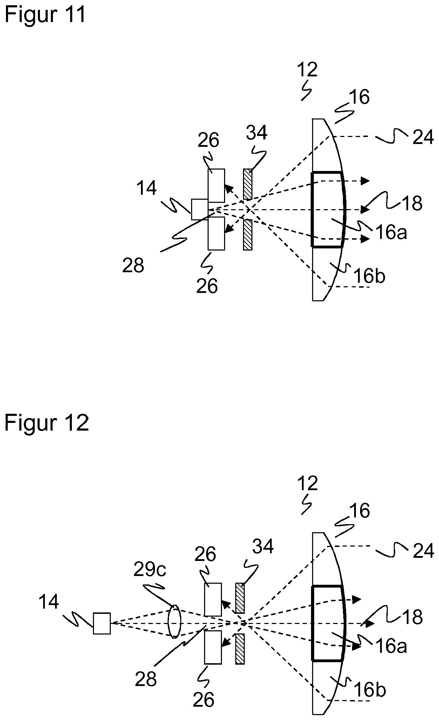

Figur 11 zeigt eine weitere Ausführungsform des Sende-Empfangsmoduls 12 mit einer zusätzlichen Feldblende 34. Der Empfangsstrahlengang des Empfangslichtbündels 24 weist einen Zwischenfokus auf, der in der Nähe der Blendenposition liegt. Deshalb entsteht eine Wirkung als Feldblende 34, die den Sichtbereich des Lichtempfängers 26 stark verkleinert und somit Fremdlicht ausblendet, das nicht von dem Lichtsender 14 und dessen Sendelichtbündel 18 stammen kann. Das Ergebnis ist eine deutliche Verbesserung des Signal-Rausch-Verhältnisses.

Dabei besteht ein Widerstreit zweier gegenläufiger Interessen: Um möglichst viel Sendelicht 18 durch die Feldblende 34 zu fädeln, ist eine große Blendenöffnung in großer Nähe wünschenswert. Andererseits ist für eine wirksame Reduzierung des Empfangs-FOVs eine kleine Blende mit einem gewissen Abstand vom Empfänger nötig. Hier muss also ein Kompromiss gefunden werden.

Figur 12 illustriert, dass dieser Widerstreit bei einer bevorzugten Ausführungsform ähnlich den Figuren 7 bis 9 mit durch ein Lichtführungselement 29a-c etwas gegen den Lichtempfänger 26 abgesetztem Lichtsender 14 aufgelöst werden kann. Figur 12 ist praktisch eine Kombination der Ausführungsform gemäß Figur 9 mit einem abbildenden Lichtführungselement 29c und einer Feldblende 34 gemäß Figur 11. Es ist hierbei möglich, das Bild des Lichtsenders 14 so weit vor die Öffnung 28 in die Nähe der Feldblende 34 oder sogar in deren Ebene hinein zu schieben, dass praktisch alles Sendelicht 18 auch durch eine äußerst schmale Feldblende 34 tritt. Die sendeseitige Anforderung an eine große Blende entfällt, weil das Sendelicht 18 an den Ort der Feldblende 34 fokussiert werden kann.

Auf ähnliche Weise lassen sich auch Ausführungsformen mit Lichtleitern als Lichtführungselement 29a-b gemäß Figur 7 oder 9 mit einer Feldblende 34 kombinieren. Dabei ist es aber nicht möglich, den Austrittspunkt des Sendelichts 18 bis in die Feldblenden-öffnung hinein zu verlagern, weil dann das Lichtführungselement 29a-b dem Empfangslicht 24 im Weg wäre. Sehr wohl kann aber der Austrittspunkt noch ein Stück in den Bereich zwischen Lichtempfänger 26 und Feldblende 34 verschoben werden.

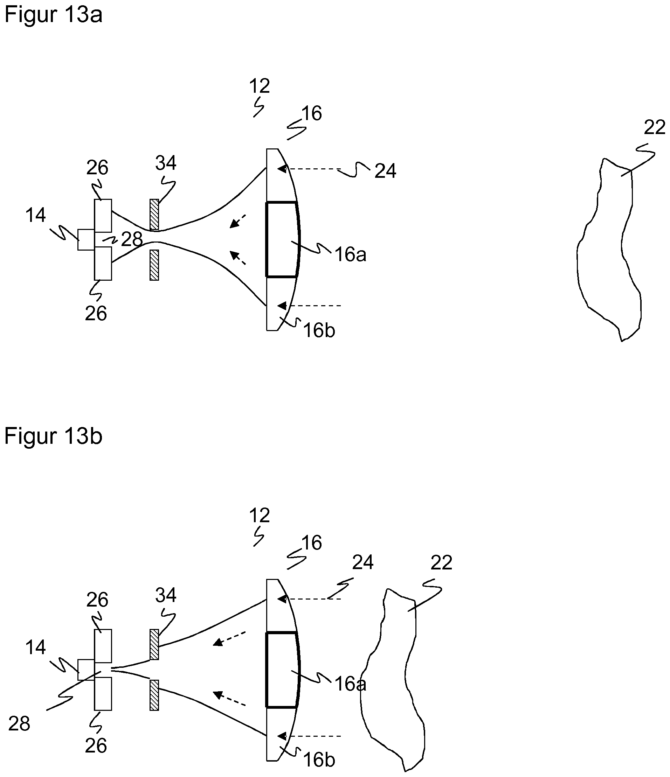

Die Figuren 13a-b illustrieren ein grundsätzliches Problem eines derartigen Aufbaus mit einem Zwischenfokus für das Empfangslichtbündel 24. Dargestellt ist der Empfangsstrahlengang in Figur 13a für ein fernes Objekt 22 und in Figur 13b für ein nahes Objekt. Für näher kommende Objekte verschiebt sich der Empfangsfokus von der Linse der gemeinsamen Optik 16 weg und rückt damit näher an den Lichtempfänger 26 heran. In gewisser Nähe des Objekts 22 ist das Empfangslichtbündel 24 dann so stark auf die Öffnung 28 fokussiert, dass praktisch das gesamte Licht dort verschwindet und keine Objekte 22 mehr detektiert werden können. Ein solcher Totbereich kann sich schon für Abstände unterhalb von zwei bis drei Metern ausbilden.

Durch Optimierungen der Linse lässt sich aber auch dieses Nahbereichsproblem lösen. Die Linse, insbesondere deren Empfangszone 16b, wird so designt, dass die minimale Strahltaille, quasi im Empfangsfokus, nicht mehr sehr klein wird, sondern absichtlich nur einen gewissen Minimaldurchmesser erreicht, der gerade noch durch die Feldblende 34 hindurchpasst. Der Empfangslichtfleck wird also auch bei nahen Objekten nicht mehr kleiner als die Blendenöffnung der Feldblende 34, so dass bei deren geeigneter Auslegung genug Licht des Empfangslichtbündels 24 verbleibt, dass nicht in der Öffnung 28 verschwindet.

Es gibt verschiedene Möglichkeiten, diesen Effekt im Linsendesign zu erzielen. Beispielsweise werden absichtlich Abbildungsfehler beibehalten, die zu einem derart großen Empfangslichtfleck führen. Alternativ wird nochmals der Parameter $a_1$ eine Asphäre genutzt, über den der minimale Strahldurchmesser im Fokus einstellbar ist. Der Querschnitt des Empfangslichtbündels 24 wird dann nirgends kleiner. Durch dieses Vorgehen werden die zu Figur 8 bis 10 erläuterten Vorteile eines Kreisrings mit denen einer Feldblende 34 kombiniert.

Auch für Ausführungsformen mit Feldblende 34 sollen einige Zahlenbeispiele angegeben werden, die ohne damit implizierte Einschränkungen für große Objektentfernungen optimiert sind. Dabei seien jeweils in weitgehender Übereinstimmung mit den bisherigen Beispielen der sendeseitige Abstrahlwinkel $\alpha_s = \pm 15°$, der maximale empfangsseitige Winkel $\alpha_E = \pm 30°$, die Chipdicken 150 $\mu$m, die lichtemittierende Fläche 50 $\mu$m bei einer Chipgröße von 300 $\mu$m des Lichtsenders 14. Für den Lichtempfänger 26 werden Abmessungen von 1 mm angesetzt, wobei dies für die Berechnungen keine Rolle spielt, sondern nur genug Fläche zur Verfügung stehen sollte, um den Empfangslichtfleck aufzunehmen, insbesondere die Blendenöffnung der Feldblende 34 kleiner als der Lichtempfänger 26 sein sollte. Die Abschätzungen der Empfangsspotgrößen und in Folge der Empfangseffizienzen gehen von der leicht vereinfachenden Annahme aus, dass die Feldblende 34 exakt im Zwischenfokus des Empfangsstrahlengangs positioniert wird.

In einem ersten Beispiel für die Situation der Figur 2 mit dem Lichtsender 14 hinter der Öffnung 28 mit einem Durchmesser von 130 $\mu$m wird eine Feldblende 34 mit einem Lochdurchmesser von 280 $\mu$m in einem Abstand von 260 $\mu$m zum Lichtempfänger 26 angeordnet. Der Empfangslichtfleck auf dem Lichtempfänger 26 hat dann einen Durchmesser von etwa 300 woraus sich eine Empfangseffizienz von ca. 80% ergibt.

In einem zweiten Beispiel für die Situation der Figur 3 mit dem Lichtsender 14 in der Öffnung 28 mit einem Durchmesser von 300 $\mu$m wird eine Feldblende 34 mit einem Lochdurchmesser von 300 $\mu$m in einem Abstand von 480 $\mu$m zu dem Lichtempfänger 26 angeordnet. Der Empfangslichtfleck auf dem Lichtempfänger 26 hat dann einen Durchmesser von etwa 550 woraus sich eine Empfangseffizienz von ca. 70% ergibt.

In einem dritten Beispiel für die Situation der Figur 4 mit direkt vor dem Lichtempfänger 26 positionierten Lichtsender 14 erzeugt dieser einen Schatten mit einem Durchmesser von 480 $\mu$m. Es wird eine Feldblende 34 mit einem Lochdurchmesser von 340 $\mu$m in einem Abstand von 690 $\mu$m zu dem Lichtempfänger 26 angeordnet. Der Empfangslichtfleck auf dem Lichtempfänger 26 hat dann einen Durchmesser von etwa 800 woraus sich eine Empfangseffizienz von ca. 65% ergibt.

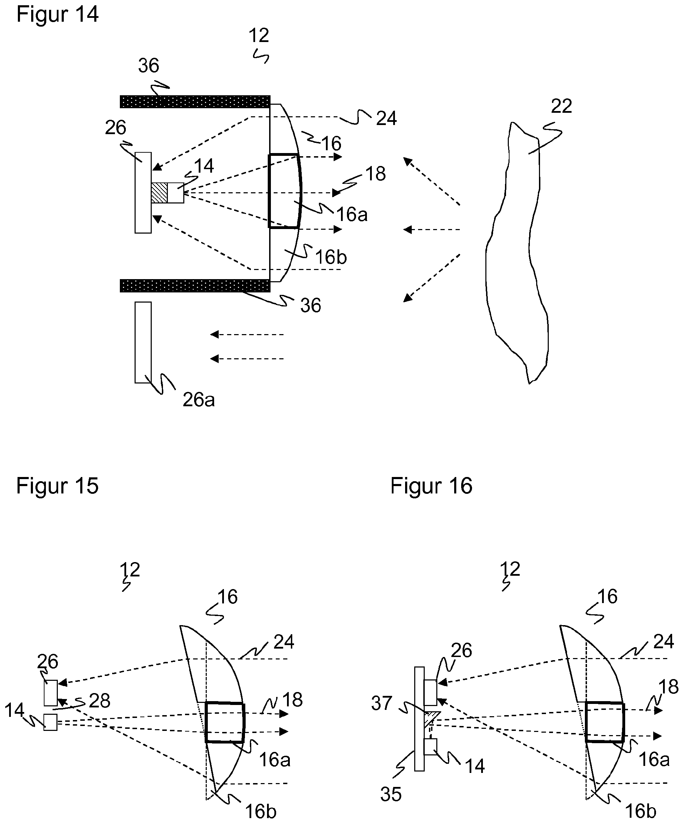

Figur 14 zeigt eine schematische Darstellung einer weiteren Ausführungsform eines Sende-Empfangsmoduls 12. Dieses Sende-Empfangsmodul 12 basiert auf einer Anordnung des Lichtsenders 14 vor dem Lichtempfänger 26 gemäß Figur 4, könnte aber ebenso anderen Ausführungsformen insbesondere mit einer Öffnung 28 beispielsweise gemäß Figur 2 oder 3 aufsetzen.

Durch die erfindungsgemäße unmittelbare räumliche Nähe von Lichtsender 14 und Lichtempfänger 26 kann sich ein Problem mit optischem oder auch elektrischem Übersprechen von dem Sendepfad direkt in den Empfangspfad ergeben. Bei einem gepulsten System ist die aktive Phase des Lichtsenders 14 und damit des Übersprechens kurz, vor allem wenn eine kurze Pulslänge beispielsweise von höchstens 1 ns gewählt wird. Im Nahbereich, während der Lichtsender 14 noch den Puls erzeugt, ist aber die Detektion des Lichtempfängers 26 weiterhin gestört, bis hin zu einem praktisch vollständigen Verlust der Detektionsfähigkeit.

Um dies zu lösen, ist in der Ausführungsform nach Figur 14 ein zusätzlicher Lichtempfänger 26a für den Nahbereich vorgesehen. Dieser zusätzliche Lichtempfänger 26a wird vorzugsweise außerhalb einer optischen, gegebenenfalls auch elektrischen Abschirmung 36 angeordnet, die ein Übersprechen unterbindet. Ein Objekt 22 im Nahbereich, beispielsweise einem Abstand bis 500 mm remittiert das Sendelichtbündel 18 aus Sicht des Sende-Empfangsmoduls 12 in einem sehr großen Bereich, so dass der zusätzliche Lichtempfänger 26a ausreichend Licht empfängt, und das selbst ohne eigene Empfangsoptik. Es ist aber denkbar, eine zusätzliche Empfangslinse zu ergänzen, die auch als Doppellinse mit der gemeinsamen Empfangsoptik 16 verbunden sein kann, dann aber vorzugsweise mit einer darin integrierten Abschirmung im Übergangsbereich. Der zusätzliche Lichtempfänger 26a ist vorzugsweise ebenfalls mit der Auswertungseinheit 30 verbunden, kann aber alternativ auch durch eine eigene Elektronik angesteuert und ausgewertet werden.

Eine andere denkbare Maßnahme, um das Übersprechen zu verhindern oder wenigstens dessen Auswirkungen zu begrenzen, ist das schon angesprochene Gating, oder es wird statt des zusätzlichen Lichtempfängers 26a ein anderer ergänzender Sensor für den Nahbereich eingesetzt, etwa ein induktiver, kapazitiver, magnetischer, Ultraschall- oder Radarsensor. Auch ein vollständiges optoelektronisches Zusatzmodul mit erfindungsgemäßem oder herkömmlichem Aufbau oder sogar ein separater zusätzlicher optoelektronischer Sensor sind vorstellbar.

Figur 15 zeigt eine schematische Darstellung eines Sende-Empfangsmoduls 12 mit einer Variante einer koaxialen Anordnung. Strenggenommen müssen bei einer koaxialen Anordnung Lichtsender 14 und Lichtempfänger 26 durchwegs oder zumindest nach Zusammenführen der Strahlwege auf einer Achse liegen. Dieses strenge Begriffsverständnis wird vorzugsweise überall für die erfindungsgemäßen Ausführungsformen vorausgesetzt. Zunächst ist aber auch eine etwas breitere Definition zugelassen, die an Figur 15 erläutert wird und die deshalb noch als koaxial bezeichnet werden könnte, weil die Strahlwege außerhalb des Sende-Empfangsmoduls 12 für alle praktischen Belange einem koaxialen System und noch keinem biaxialen System entsprechen.

In Figur 15 liegen Lichtsender 14 und Lichtempfänger 26 nebeneinander. Die Öffnung 28 ist nur noch zu einer Seite begrenzt. Lichtsender 14 und Lichtempfänger 26 befinden sich aber weiterhin unmittelbar nebeneinander, in den schon mehrfach erwähnten Abständen von höchstens 300 μm oder noch weniger, in manchen Fällen wie bei einem SPAD-Detektor auch etwa weiter mit höchstens 500 μm oder manchmal noch mehr. Jedenfalls sind Lichtsender 14 und Lichtempfänger mikromechanisch aneinander befestigt und dadurch hochgenau positionierbar.

Die Linse der gemeinsamen Optik 16 ist immer noch koaxial in dem Sinne, dass die Sendezone 16a zentrisch sitzt, umgeben von der Empfangszone 16b, allerdings möglicherweise minimal aus der Mitte verschoben. Eine solche Verschiebung angesichts der Mikrometerabstände zwischen Lichtsender 14 und Lichtempfänger 26 im Vergleich zum Abstand zur Linse hat kaum eine praktische Auswirkung.

Die Form der Linse weicht aber vorzugsweise ab. Sie ist in dem Bereich der Empfangszone 16b nicht mehr rotationssymmetrisch, sondern weist dort eine Keilform beziehungsweise prismatische Eigenschaften auf. Solche Modifikationen können auf der Planseite angebracht werden, oder sie werden in die gekrümmte Seite integriert, die dies für eine zusätzlich denkbare Kegelkomponente oben schon erläutert wurde. Die Verkippung ist in Figur 15 weit übertrieben dargestellt, tatsächlich genügt eine Größenordnung von 20mrad oder 1°, was in etwa der Wert für einen Seitenversatz von 500 μm zwischen Lichtsender 14 und Lichtempfänger 26 bei einer Brennweite von 50 mm und einem Brechungsindex von 1,5 wäre.

Mit einer solchen Anordnung und Linse ist dann der Strahlenverlauf außerhalb des Sende-Empfangsmoduls 12 sowohl konzentrisch als auch kollinear, weil die leichte Verkippung des Empfangs- zum Sendestrahlengang innerhalb des Sende-Empfangsmoduls 12 durch die Keilform der Empfangszone 16b kompensiert wird, somit effektiv koaxial, wenn auch nicht im strengen oben genannten Begriffsverständnis, weil Licht sender 14 und Lichtempfänger 26 nebeneinander liegen.

Figur 16 zeigt, wie die soeben beschriebene gemeinsame Optik 16 mit Verkippungseigenschaften der Empfangszone 16b für einen Lichtsender 14 mit seitlichem Lichtaustritt genutzt werden kann, insbesondere einen Kantenemitter. Dazu sind Lichtsender 14 und Lichtempfänger auf derselben Ebene nebeneinander angeordnet und mikromechanisch miteinander verbunden, hier beispielhaft durch Anordnung auf einer gemeinsamen mikromechanischen Trägerplatte 35. Das seitlich austretende Sendelicht 14 verläuft zunächst in parallel zu der Ebene der Trägerplatte 35 und wird dann durch ein Umlenkelement 37 in die gewünschte Abstrahlrichtung umgelenkt. Effektiv ist danach der Strahlengang der gleiche wie in Figur 15.

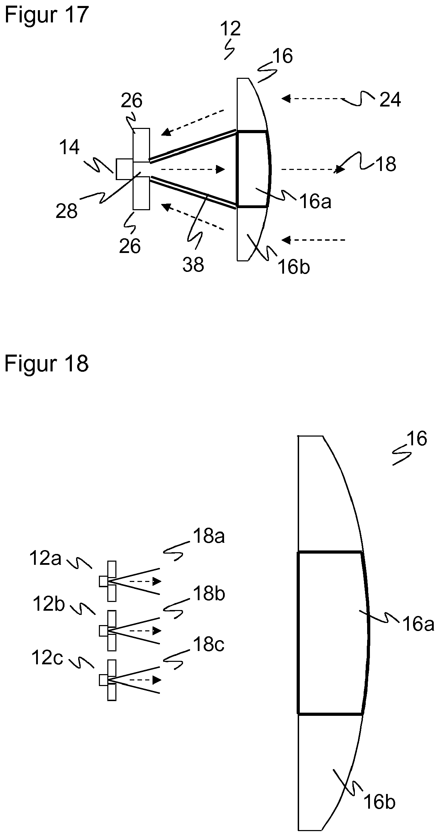

Figur 17 illustriert eine weitere Ausführungsform des Sende-Empfangsmoduls 12. Hier ist der Sendestrahlengang durch einen Sendetubus 38 abgeschirmt. Damit sind jegliche Formen einer mechanischen Kanaltrennung gemeint, mit denen optisches und möglicherweise auch elektrisches Übersprechen verhindert wird. Der Sendetubus 38 verhindert natürlich auch, dass zentral einfallende Anteile des Empfangslichtbündels 24 den Lichtempfänger 26 erreichen können. Solche Anteile gibt es aber ohnehin wegen der Umkehrbarkeit der Strahlungswege in der Sendezone 16a praktisch nicht.

Figur 18 zeigt eine weitere Ausführungsform, in der mehrere Sende-Empfangsmodule 12a-c hinter einer gemeinsamen Optik 16 positioniert sind. Solange der seitliche Abstand zwischen den Sende-Empfangsmodulen 12 deutlich kleiner ist als die Gesamtabmessung der Linse, ist es weiterhin möglich, eine einzige Linse mit einer zentralen Sendezone 16a für die mehreren Sendelichtbündel 18a-c und einer äußeren Empfangszone 16b für die mehreren Empfangslichtbündel 24 zu konstruieren. Dabei ist zu beachten, dass die Darstellung in Figur 18 nicht maßstäblich ist. Durch die Kombination mehrerer Sende-Empfangsmodule 12a-c mit einer Linse entsteht ein sehr einfaches und kompaktes Mehrstrahl-Modul, das beispielsweise in einem Lichtgitter, einem Mehrfachtaster oder einem Laserscanner mit mehreren Scanebenen eingesetzt werden kann. Natürlich können, um noch mehr Strahlen zu erhalten, auch mehrere Mehrstrahl-Module miteinander kombiniert werden.

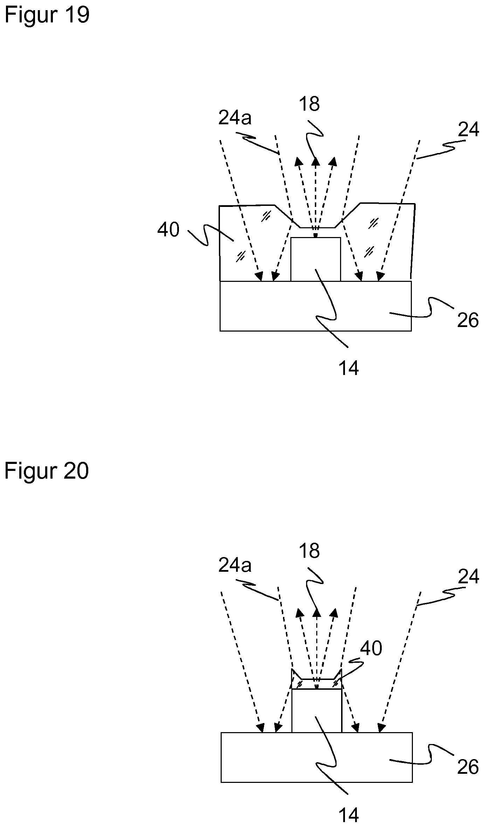

Die Figuren 19 und 20 illustrieren noch eine weitere Ausführungsform des Sende-Empfangsmoduls 12, die sich besonders, aber nicht ausschließlich für die Anordnung eines Lichtsenders 14 auf dem Lichtempfänger 26 gemäß Figur 4 eignet. Dabei wird vor dem Lichtempfänger 26 und dem Lichtsender 14, in Figur 20 durch andere geometrische Gestaltung nur vor dem Lichtsender 14, ein zusätzliches optisches Element 40 angeordnet. Das optische Element 40 ist so geformt, dass es das austretende Sendelichtbündel 18 wegen der kleinen Ein- und Austrittswinkel praktisch nicht beeinflusst. Einige Strahlen 24a des Empfangslichtbündels 24 jedoch, die auf den Lichtempfänger 14 zulaufen würden und damit für die Detektion verloren wären, werden wegen ihres schrägeren Einfallswinkels und der ansteigenden Geometrie des optischen Elements in einem Umkreis um das Zentrum nach außen hin umgebrochen und treffen daher zumindest teilweise doch noch den Lichtempfänger 26. Somit wirkt das optische Element 40 wie eine Art Tarnkappe, die den Lichtsender 14 für die Strahlen 24a unsichtbar macht, indem sie auf den Lichtempfänger 26 umgelenkt werden. Dadurch reduziert sich die Menge des durch den Lichtsender 14 und dessen Schatten verlorenen Lichts. Das optische Element 40 lässt beispielsweise als Verguss auf Lichtsender 14 beziehungsweise Lichtempfänger 26 realisieren.

Die Erfindung wurde anhand von Ausführungsformen beschrieben, die jeweils in erste Linie auf eine bestimmte vorteilhafte Modifikation gerichtet sind, manchmal aber auch in bestimmten Kombinationen erläutert wurden. Die Erfindung umfasst auch die Varianten, mit denen die vorteilhaften Modifikationen in anderer Weise kombiniert werden. So kann weitgehend unabhängig voneinander die Anordnung des Lichtsenders 14 hinter der Öffnung 28, in der Öffnung 28 oder vor dem Lichtempfänger 26 oder das Design der Linse mit mehreren Zonen, einer Kegelkomponente und/oder Abbildungsfehlern gewählt, die Feldblende 34 in diversen Abständen und Größen der Blendenöffnung, ein zusätzlicher Lichtempfänger 26a oder eine leicht von der idealen koaxialen Anordnung abweichende Anordnung mit entsprechend angepasster Empfangsoptik 16, der Sendetubus 38 und/oder das optische Element 40 hinzugefügt oder weggelassen werden. Außerdem können gleichartige oder auch unterschiedliche Sende-Empfangsmodule 12a-c in diversen Ausgestaltungen wie in Figur 18 zu einem Mehrstrahl-Modul zusammengeführt werden.

**Patentansprüche**

1. Sende-Empfangsmodul (12) für einen optoelektronischen Sensor (10), das einen Lichtsender (14) mit einer Sendeoptik (16, 16a) und einen Lichtempfänger (26) mit einer Empfangsoptik (16, 16b) aufweist, wobei ein Abstrahlwinkel ($\alpha_s$) von Sendelicht (18) des Lichtsenders (14) kleiner ist als ein Empfangswinkel ($\alpha_E$) von auf dem Lichtempfänger (26) auftreffendem Empfangslicht (24), Lichtsender (14) und Lichtempfänger (26) koaxial angeordnet sind und die Sendeoptik (16, 16a) und die Empfangsoptik (16, 16b) als gemeinsame Optik (16) ausgebildet sind, wobei Lichtsender (14) und Lichtempfänger (26) mindestens mittelbar mikromechanisch miteinander verbunden sind, wobei die gemeinsame Optik (16) als gemeinsame Linse ausgebildet ist, wobei die gemeinsame Linse als Mehrzonenlinse mit einer Sendezone (16a) und einer Empfangszone (16b) ausgebildet ist, wobei insbesondere die Sendezone (16a) zentral und die Empfangszone (16b) die Sendezone (16a) umgebend angeordnet ist, und wobei insbesondere der Lichtsender (14) im Brennpunkt der Sendezone (16a) angeordnet ist, **dadurch gekennzeichnet, dass** die Empfangszone (16b) eine Kegelkomponente aufweist und ein durch die Kegelkomponente erzeugtes ringförmiges Strahlprofil des Empfangslichts einen zentralen Bereich (32) einer Größe aufweist, die dem Lichtsender (14) entspricht.

2. Sende-Empfangsmodul (12) nach Anspruch 1, wobei die Sendezone (16a) eine kleinere Brennweite aufweist als die Empfangszone (16b).

3. Sende-Empfangsmodul (12) nach einem der vorhergehenden Ansprüche, wobei Lichtsender (14) und Lichtempfänger (26) voneinander höchstens um 300 $\mu$m beabstandet sind.

4. Sende-Empfangsmodul (12) nach einem der vorhergehenden Ansprüche, wobei der Lichtempfänger (26) eine Öffnung (28) aufweist, in welcher oder hinter welcher der Lichtsender (14) angeordnet ist, und wobei die Öffnung (28) insbesondere höchstens 300 $\mu$m groß ist.

5. Sende-Empfangsmodul (12) nach Anspruch 4, wobei der Lichtsender (14) hinter der Öffnung (28) und zwischen Lichtsender (14) und Lichtempfänger (26) ein Lichtführungselement (29a-c) angeordnet ist, welches das Sendelicht (18) in die Öffnung (28) führt, so dass die Öffnung die faktische Lichtquelle ist.

6. Sende-Empfangsmodul (12) nach Anspruch 5, wobei das Lichtführungselement ein Lichtleitelement (29a-b) aufweist oder ein Bild der Lichtquelle in oder vor der Öffnung erzeugt (29c).

7. Sende-Empfangsmodul (12) nach einem der Ansprüche 1 bis 3, wobei der Lichtsender (14) auf dem Lichtempfänger (26) angeordnet ist.

8. Sende- Empfangsmodul (12) nach einem der vorhergehenden Ansprüche, wobei der gemeinsamen Optik (16) eine Feldblende (34) zugeordnet ist und wobei insbesondere die gemeinsame Optik (16) dafür ausgebildet ist, das Empfangslicht (24) nur bis auf eine Ausdehnung einer Blendenöffnung der Feldblende (34) zu fokussieren.

9. Sende-Empfangsmodul (12) nach einem der vorhergehenden Ansprüche, wobei die gemeinsame Optik (16) Strahlablenkungseigenschaften aufweist, um eine Verkippung des Empfangsstrahlengangs zum Sendestrahlengang auszugleichen.

10. Sende-Empfangsmodul (12) nach einem der vorhergehenden Ansprüche, wobei zwischen Lichtsender (14) und gemeinsamer Optik (16) ein Sendetubus (38) angeordnet ist und/oder wobei dem Lichtsender (14) ein optisches Element (40) vorgeordnet ist, welches in Richtung auf den Lichtsender (14) eintreffendes Empfangslicht (24a) auf den Lichtempfänger (26) umlenkt.

11. Optoelektronischer Sensor (10) zur Erfassung von Objekten (22) in einem Überwachungsbereich (20), insbesondere Lichttaster oder Laserscanner, mit mindestens einem Sende-Empfangsmodul (12) nach einem der vorhergehenden Ansprüche sowie mit einer Auswertungseinheit (30), die dafür ausgebildet ist, aus einem Empfangssignal des Lichtempfängers (26) eine Lichtlaufzeit und daraus einen Abstand zu einem in dem Überwachungsbereich (20) erfassten Objekt (22) zu bestimmen.

12. Verfahren zur Erfassung von Objekten (22) in einem Überwachungsbereich (20), bei dem ein Lichtsender (14) durch eine Sendeoptik (16, 16a) Sendelicht (18) in den Überwachungsbereich (20) aussendet und ein Lichtempfänger (26) Empfangslicht (24) mit dem in dem Überwachungsbereich (20) remittierten Sendelicht (18) durch eine Empfangsoptik (16, 16b) empfängt, wobei ein Abstrahlwinkel ($\alpha_s$) des Sendelichts (18) kleiner ist als ein Empfangswinkel ($\alpha_E$) des Empfangslichts (24), Lichtsender (14) und Lichtempfänger (26) koaxial angeordnet sind und die Sendeoptik (16, 16a) und die Empfangsoptik (16, 16b) als gemeinsame Optik (16) ausgebildet sind, wobei zumindest ein Teil des Empfangslichts (24) in unmittelbarer Nähe von höchstens 500 $\mu$m von dem Ort empfangen wird, an dem das Sendelicht (18) abgestrahlt wird, indem Lichtsender (14) und Lichtempfänger (26) mindestens mittelbar mikromechanisch miteinander verbunden sind,
wobei die gemeinsame Optik (16) als gemeinsame Linse ausgebildet ist,
wobei die gemeinsame Linse als Mehrzonenlinse mit einer Sendezone (16a) und einer Empfangszone (16b) ausgebildet ist, wobei insbesondere die Sendezone (16a) zentral und die Empfangszone (16b) die Sendezone (16a) umgebend angeordnet ist,
und wobei insbesondere der Lichtsender (14) im Brennpunkt der Sendezone (16a) angeordnet ist,
**dadurch gekennzeichnet, dass** die Empfangszone (16b) eine Kegelkomponente aufweist und ein durch die Kegelkomponente erzeugtes ringförmiges Strahlprofil des Empfangslichts einen zentralen Bereich (32) einer Größe aufweist, die dem Lichtsender (14) entspricht.

**Claims**

1. A transceiver module (12) for an optoelectronic sensor (10), the transceiver module (12) comprising a light transmitter (14) having transmission optics (16, 16a) and a light receiver (26) having reception optics (16, 16b), wherein a transmission angle ($\alpha_s$) of transmitted light (18) of the light transmitter (14) is smaller than a receiving angle ($\alpha_E$) of received light (24) impinging on the light receiver (26), light transmitter (14) and light receiver (26) are arranged coaxially, and the transmission optics (16, 16a) and the reception optics (16, 16b) are configured as common optics (16), with light transmitter (14) and light receiver (26) being micromechanically connected to one another at least indirectly, wherein the common optics (16) is configured as a common lens, the common lens being configured as a multi-zone lens having a transmission zone (16a) and a reception zone (16b), wherein in particular the transmission zone (16a) is arranged centrally and the reception zone (16b) is arranged surrounding the transmission zone (16a) and wherein in particular the light transmitter (14) is arranged at the focal point of the transmission zone (16a), **characterized in that** the reception zone (16b) has a cone component, and an annular beam profile of the received light generated by the cone component has a central region (32) of a size corresponding to the light transmitter (14).

2. The transceiver module (12) according to claim 1,
wherein the transmission zone (16a) has a shorter focal length than the receiving zone (16b).

3. The transceiver module (12) according to any of the preceding claims,
wherein light transmitter (14) and light receiver (26) are spaced from each other by at most 300 $\mu$m.

4. The transceiver module (12) according to any of the preceding claims,
wherein the light receiver (26) has an opening (28) in which or behind which the light transmitter (14) is arranged, and wherein the opening (28) is in particular at most 300 $\mu$m in size.

5. The transmitter-receiver module (12) according to claim 4,
wherein the light transmitter (14) is arranged behind the opening (28) and between the light transmitter (14) and the light receiver (26) a light guiding element (29a-c) is arranged which guides the transmitted light (18) into the opening (28), so that the opening is the actual light source.

6. The transceiver module (12) according to claim 5,
wherein the light guiding element comprises a light conducting element (29a-b) or generates (29c) an image of the light source in or in front of the opening.

7. The transceiver module (12) according to any one of claims 1 to 3,
wherein the light transmitter (14) is arranged on the light receiver (26).

**8.** The transceiver module (12) according to any of the preceding claims, wherein a field diaphragm (34) is associated with the common optics (16) and wherein in particular the common optics (16) is configured to focus the received light (24) only to an extent of an aperture of the field diaphragm (34).

**9.** The transceiver module (12) according to any of the preceding claims, wherein the common optics (16) has beam deflection characteristics to compensate for tilting of the received beam path to the transmitted beam path.

**10.** The transceiver module (12) according to any of the preceding claims, wherein a transmission tube (38) is arranged between light transmitter (14) and common optics (16) and/or wherein an optical element (40) is arranged in front of the light transmitter (14) which deflects received light (24a) arriving in the direction of the light transmitter (14) to the light receiver (26).

**11.** An optoelectronic sensor (10) for detecting objects (22) in a monitoring area (20), in particular using a scanning detection principle or being a laser scanner, comprising at least one transceiver module (12) according to one of the preceding claims and an evaluation unit (30) which is configured to determine a light time of flight from a received signal of the light receiver (26) and, from this, a distance to an object (22) detected in the monitoring area (20).

**12.** A method for detecting objects (22) in a monitoring area (20), wherein a light transmitter (14) transmits transmitted light (18) into the monitoring area (20) through transmission optics (16, 16a) and a light receiver (26) receives, through reception optics (16, 16b) received light (24) including transmitted light (18) remitted in the monitoring area (20), wherein a transmission angle ($\alpha_S$) of the transmitted light (18) is smaller than a reception angle ($\alpha_E$) of the received light (24), light transmitter (14) and light receiver (26) are arranged coaxially, and the transmission optics (16, 16a) and the receiving optics (16, 16b) are configured as common optics (16), wherein at least part of the received light (24) is received in the immediate vicinity of at most 500 $\mu$m from the location where the transmitted light (18) is transmitted in that light transmitter (14) and light receiver (26) are micromechanically connected to one another at least indirectly, wherein the common optics (16) is configured as a common lens, the common lens being configured as a multi-zone lens having a transmission zone (16a) and a reception zone (16b), wherein in particular the transmission zone (16a) is arranged centrally and the reception zone (16b) is arranged surrounding the transmission zone (16a) and wherein in particular the light transmitter (14) is arranged at the focal point of the transmission zone (16a),
**characterized in that** the reception zone (16b) has a cone component, and an annular beam profile of the received light generated by the cone component has a central region (32) of a size corresponding to the light transmitter (14).

## Revendications

**1.** Module d'émission/réception (12) pour un capteur optoélectronique (10), qui comporte un émetteur de lumière (14) avec une optique d'émission (16, 16a) et un récepteur de lumière (26) avec une optique de réception (16, 16b), dans lequel un angle de rayonnement ($\alpha s$) de la lumière d'émission (18) de l'émetteur de lumière (14) est inférieur à un angle de réception ($\alpha_E$) de la lumière de réception (24) tombant sur le récepteur de lumière (26), l'émetteur de lumière (14) et le récepteur de lumière (26) sont disposés coaxialement, et l'optique d'émission (16, 16a) et l'optique de réception (16, 16b) sont réalisées sous forme d'optique commune (16), l'émetteur de lumière (14) et le récepteur de lumière (26) sont au moins indirectement reliés entre eux par voie micromécanique, l'optique commune (16) est réalisée sous la forme d'une lentille commune, la lentille commune est réalisée sous la forme d'une lentille multizone ayant une zone d'émission (16a) et une zone de réception (16b), en particulier la zone d'émission (16a) est disposée au centre et la zone de réception (16b) est disposée de manière à entourer la zone d'émission (16a), et en particulier l'émetteur de lumière (14) est disposé au point focal de la zone d'émission (16a),
**caractérisé en ce que**
la zone de réception (16b) présente une composante conique, et un profil de faisceau annulaire de la lumière de réception, généré par la composante conique, présente une région centrale (32) d'une taille qui correspond à l'émetteur de lumière (14).

**2.** Module d'émission/réception (12) selon la revendication 1, dans lequel la zone d'émission (16a) présente une distance focale inférieure à celle de la zone de réception (16b).

**3.** Module d'émission/réception (12) selon l'une des revendications précédentes, dans lequel l'émetteur de lumière (14) et le récepteur de lumière (26) sont espacés l'un de l'autre au maximum de 300 $\mu$m.

**4.** Module d'émission/réception (12) selon l'une des revendications précédentes, dans lequel le récepteur de lumière (26) présente un orifice (28) dans lequel ou derrière lequel est disposé l'émetteur de lumière (14), l'orifice (28) ayant une taille qui est en particulier au maximum de 300 $\mu$m.

**5.** Module d'émission/réception (12) selon la revendication 4,
dans lequel l'émetteur de lumière (14) est disposé derrière l'orifice (28), et un élément de guidage de lumière (29a - c) est disposé entre l'émetteur de lumière (14) et le récepteur de lumière (26) et guide la lumière d'émission (18) jusque dans l'orifice (28), de sorte que l'orifice est la source de lumière proprement dite.

**6.** Module d'émission/réception (12) selon la revendication 5,
dans lequel l'élément de guidage de lumière comporte un élément conducteur de lumière (29a - b) ou crée une image de la source de lumière dans ou devant ledit orifice (29c).

**7.** Module d'émission/réception (12) selon l'une des revendications 1 à 3,
dans lequel l'émetteur de lumière (14) est disposé sur le récepteur de lumière (26).

**8.** Module d'émission/réception (12) selon l'une des revendications précédentes, dans lequel un diaphragme de champ (34) est attribué à l'optique commune (16), et en particulier l'optique commune (16) est réalisée pour focaliser la lumière de réception (24) uniquement jusqu'à une extension d'une ouverture du diaphragme de champ (34).

**9.** Module d'émission/réception (12) selon l'une des revendications précédentes, dans lequel l'optique commune (16) présente des propriétés de déviation du faisceau pour compenser une inclinaison du trajet du faisceau de réception par rapport au trajet du faisceau d'émission.

**10.** Module d'émission/réception (12) selon l'une des revendications précédentes, dans lequel un tube d'émission (38) est disposé entre l'émetteur de lumière (14) et l'optique commune (16), et/ou un élément optique (40) est disposé en avant de l'émetteur de lumière (14), qui dévie la lumière de réception (24a), arrivant dans la direction de l'émetteur de lumière (14), vers le récepteur de lumière (26).

**11.** Capteur optoélectronique (10) pour la détection d'objets (22) dans une zone à surveiller (20), en particulier capteur photoélectrique ou scanner à laser, comportant au moins un module d'émission/réception (12) selon l'une des revendications précédentes ainsi qu'une unité d'évaluation (30) qui est réalisée pour déterminer, à partir d'un signal de réception du récepteur de lumière (26), un temps de parcours de lumière et, à partir de celui-ci, une distance par rapport à un objet (22) détecté dans la zone à surveiller (20).

**12.** Procédé de détection d'objets (22) dans une zone à surveiller (20),
dans lequel un émetteur de lumière (14) émet de la lumière d'émission (18) dans la zone à surveiller (20) par une optique d'émission (16, 16a) et un récepteur de lumière (26) reçoit de la lumière de réception (24) avec la lumière d'émission (18), réémise dans la zone à surveiller (20), par une optique de réception (16, 16b), un angle de rayonnement (as) de la lumière d'émission (18) est inférieur à un angle de réception ($\alpha_E$) de la lumière de réception (24), l'émetteur de lumière (14) et le récepteur de lumière (26) sont disposés coaxialement, et l'optique d'émission (16, 16a) et l'optique de réception (16, 16b) sont réalisées sous forme d'optique commune (16), au moins une partie de la lumière de réception (24) étant reçue à proximité immédiate au maximum à 500 $\mu$m de l'endroit où la lumière d'émission (18) est émise, du fait que l'émetteur de lumière (14) et le récepteur de lumière (26) sont au moins indirectement reliés entre eux par voie micromécanique, l'optique commune (16) est réalisée sous la forme d'une lentille commune, la lentille commune est réalisée sous la forme d'une lentille multizone ayant une zone d'émission (16a) et une zone de réception (16b), en particulier la zone d'émission (16a) est disposée au centre et la zone de réception (16b) est disposée de manière à entourer la zone d'émission (16a), et en particulier l'émetteur de lumière (14) est disposé au point focal de la zone d'émission (16a),
**caractérisé en ce que**
la zone de réception (16b) présente une composante conique, et un profil de faisceau annulaire de la lumière de réception, généré par la composante conique, présente une région centrale (32) d'une taille qui correspond à l'émetteur de lumière (14).

Figur 1

Figur 2

Figur 3

Figur 4

Figur 5

Figur 6

Figur 7

Figur 8

Figur 9

Figur 10

Figur 11

Figur 12

Figur 13a

Figur 13b

Figur 14

Figur 15

Figur 16

Figur 17

Figur 18

Figur 19

Figur 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19757849 B4
- EP 2860497 B1
- EP 2312919 A1
- US 20170269215 A1
- US 20130206967 A1

**In der Beschreibung aufgeführte Nicht-Patentliteratur**

- **M. SCHILLGALIES.** *Micro-Hole Chip Technology For Next Level of Integrated Optical Detector Systems,* 30. Marz 2011